# EUROPEAN PATENT APPLICATION

(11) **EP 3 018 597 A1**
(43) Date of publication of application: **11.05.2016**
(21) Application number: 15193678.8
(22) Date of filing: 09.11.2015
(51) Int. Cl.: G06F 17/30, G05B 21/02, G06Q 10/06

(54) **CRAWLER FOR DISCOVERING CONTROL SYSTEM DATA IN AN INDUSTRIAL AUTOMATION ENVIRONMENT**

(30) Priority: 07.11.2014 US 201414536504
(71) Applicant: Rockwell Automation Technologies, Inc., Mayfield Heights, OH 44124 (US)
(72) Inventor: BLISS, Ronald E., Twinsburg, OH Ohio 44087 (US); REICHARD, Douglas J., Fairview Park, OH Ohio 44126 (US); SANDLER, Scott N., Chagrin Falls, OH Ohio 44023 (US); PANTALEANO, Michael J., Willoughby, OH Ohio 44094 (US); CAHALANE, Ryan, Chagrin Falls, OH Ohio 44023 (US); SINGHAI, Mohit, Lyndhurst, OH Ohio 44124 (US); MCCLEAVE, Bruce T., Mission Viejo, CA California 92692 (US)
(74) Representative: Grünecker Patent- und Rechtsanwälte PartG mbB

(57) **Abstract**

An industrial data indexing system facilitates discovery and indexing of plant-wide data residing on multiple different data platforms. The indexing system automatically inventories industrial devices and other data sources located throughout a plant, and identifies available data items on each data source. The indexing system indexes the discovered data items in a federated data model that can subsequently be searched to locate data items or tags of interest. The federated data model records references to data items found on different types of data sources, including but not limited to industrial controller programs, human-machine interface applications, data historians, device documentation stores, inventory tracking systems, and other such data sources. The indexing system also discovers and records interdependencies between data items, which can be used to improve relevancy of search results returned to the user.

## Description

### BACKGROUND

The subject matter disclosed herein relates generally to industrial automation systems, and, more particularly, to a data discovery and indexing system capable of discovering and recording interdependencies between plant-wide industrial data across a range of different data source platforms for subsequent search and retrieval purposes.

### BRIEF DESCRIPTION

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

In one or more embodiments, a system for indexing industrial data is provided, comprising a discovery component configured to discover available data items distributed across multiple data sources of an industrial environment, wherein the multiple data sources comprise at least a first data source corresponding to a first data platform and a second data source corresponding to a second data platform; and an indexing component configured to generate a searchable federated data model that records respective locations of the data items based on information about the available data items generated by the discovery component.

Also, one or more embodiments provide a method for discovering and indexing multi-platform industrial data, comprising deploying, by a system comprising a processor, a discovery agent on an plant network of an industrial environment; receiving, by the system, information from the discovery agent about available data items located on multiple data sources of the industrial environment, wherein the multiple data sources comprise at least a first data source corresponding to a first data platform and a second data source corresponding to a second data platform; and generating, by the system, a federated data model that indexes respective locations of the data items.

Also, according to one or more embodiments, a non-transitory computer-readable medium is provided having stored thereon instructions that, in response to execution, cause a system to perform operations, the operations, comprising deploying a discovery agent on an plant network of an industrial environment; receiving information from the discovery agent about available data items located on multiple data sources of the industrial environment, wherein the multiple data sources comprise at least a first data source corresponding to a first data platform and a second data source corresponding to a second data platform; generating, a federated data model that indexes respective locations of the data items.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a block diagram of an example industrial control environment.
FIG. 2 is a conceptual diagram illustrating industrial data federation.
FIG. 3 is a block diagram of an example multi-platform industrial data indexing system.
FIG. 4 is a block diagram of a generalized example architecture including an industrial data indexing system that discovers and indexes multi-platform data throughout an industrial environment.
FIG. 5 is a block diagram illustrating components of the multi-platform industrial search system.
FIG. 6 is a block diagram that illustrates processing performed by an industrial data indexing system.
FIG. 7 is a diagram illustrating creation of a pre-indexed sub-model using indexing functionality implemented on an industrial controller.
FIG. 8 is a diagram illustrating submission of a pre-indexed sub-model to an industrial data indexing system.
FIG. 9 is a diagram illustrating an architecture in which a discovery agent collects and indexing message log information.
FIG. 10 is a diagram of an example smart device capable of self-reporting to an industrial data indexing system.
FIG. 11 is a diagram illustrating transformation of discovered data by a transform component.
FIG. 12 is an example search result screen that can be delivered by multi-platform industrial search system.
FIG. 13 is an example search result screen including an expanded list of controller logic reference results.
FIG. 14 is an example controller logic development screen launched by the industrial search system in response to selection of a "Launch Program" button corresponding to a controller logic reference result.
FIG. 15 is an example search result screen including an expanded list of visualization reference search results.
FIG. 16 is an example HMI screen invoked by selection of a "Launch Program" button associated with a visualization reference search result.
FIG. 17 is a conceptual diagram of a generalized cloud-based implementation for an industrial search system.
FIG. 18 is a block diagram illustrating a cloud-based industrial search service.
FIG. 19 is an example home interface screen that can be served to a client device by industrial search system.
FIG. 20 is a flowchart of an example methodology for identifying and indexing multi-platform data in an industrial environment.
FIG. 21 is a flowchart of an example methodology for pre-indexing available data items of an industrial control system prior to deployment in a plant facility.
FIG. 22 is a flowchart of an example methodology for discovering and indexing relationships between items of multi-platform industrial data.
FIG. 23 is an example computing environment.
FIG. 24 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

Industrial controllers and their associated I/O devices are central to the operation of modern automation systems. These controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such platforms.

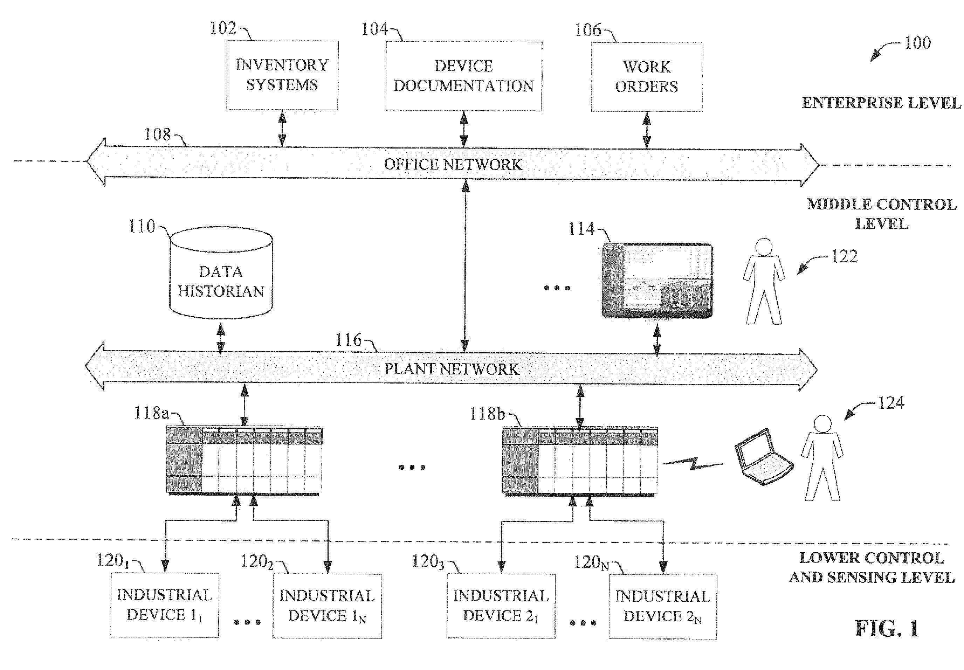

FIG. 1 is a block diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial systems. One or more industrial controllers 118 may also comprise a soft controller executed on a personal computer or other hardware platform, or on a cloud platform. Some hybrid devices may also combine controller functionality with other functions (e.g., visualization). The control programs executed by industrial controllers 118 can comprise any conceivable type of code used to process input signals read from the industrial devices 120 and to control output signals generated by the industrial controllers, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot control inputs, valves, and the like.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over a network using, for example, a communication module or an integrated networking port. Exemplary networks can include the Internet, intranets, Ethernet, DeviceNet, ControlNet, Data Highway and Data Highway Plus (DH/DH+), Remote I/O, Fieldbus, Modbus, Profibus, wireless networks, serial protocols, and the like. The industrial controllers 118 can also store persisted data values that can be referenced by the control program and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Industrial controllers 118 and HMIs 114 comprise two sources of information relating to the industrial processes and systems being controlled within the plant environment. Since HMIs 114 leverage data from industrial controllers 118 (or read directly from controlled industrial devices or other I/O devices in some scenarios) to facilitate visualization of the controlled systems, both the industrial controllers 118 and the HMIs 114 may contain information relating a common aspect of the industrial systems. For example, the control programming (e.g., ladder logic, sequential function chart, etc.) for controlling operation of a particular tank used in a batch process may execute on one of the industrial controllers 118, while the operator interface screens for viewing a graphical representation of the tank's current status and relevant setpoints (e.g., level setponts, maximum flow setpoints, etc.) may be viewed on one of the HMIs 114. However, since these two sources of information are segregated cross two different data sources and platforms, operators and maintenance personnel are typically only able to view one source of information at a time. That is, operators may choose to view the operator interface screens for the tank of interest on the relevant HMI terminal (see operator 122), or may connect a personal computing device (e.g., a laptop or tablet computer) to the industrial controller to view the control programming used to control the tank's operation (see operator 124). In most cases, the operator must be in physical proximity to either the HMI terminal or the industrial controller in order to view the information on that particular data source. Consequently, during troubleshooting of maintenance issues involving the tank, personnel must travel to the source of the information (e.g., the HMI terminal or industrial controller, which are often located near the physical machine being controlled) and locally search each of the HMI and the industrial controller individually.

Some industrial environments may also include other sources of potentially relevant information relating to specific aspects of the controlled industrial systems. These may include, for example, a data historian 110 that aggregates and stores production information collected from the industrial controllers 118 or other data sources, or a device documentation store 104 containing electronic documentation for the various industrial devices making up the controlled industrial systems. Other information sources may include an inventory tracking system 102, a work order management system 106, repositories for machine or process drawings and documentation, vendor product documentation storage, vendor knowledgebases, internal knowledgebases, or other such systems, some or all of which may reside on an office network 108 of the industrial environment. These diverse information sources are spread across many locations and systems both within the plant environment and externally (e.g., on the Internet). When diagnosing problems, maintenance personnel are often required to search several of these sources of information individually, using several different software packages specific to the respective data sources being searched. Moreover, searching for information pertaining to a particular device or machine often requires an extensive knowledge of the overall industrial system in order to locate the data source (e.g., industrial controllers, HMIs, etc.), to be searched, as well as to identify the relevant operator screens and control program routines. Individually searching each of these data sources in connection with solving a system downtime issue or other problem can delay correction of maintenance issues, resulting in lost revenue and scheduling problems.

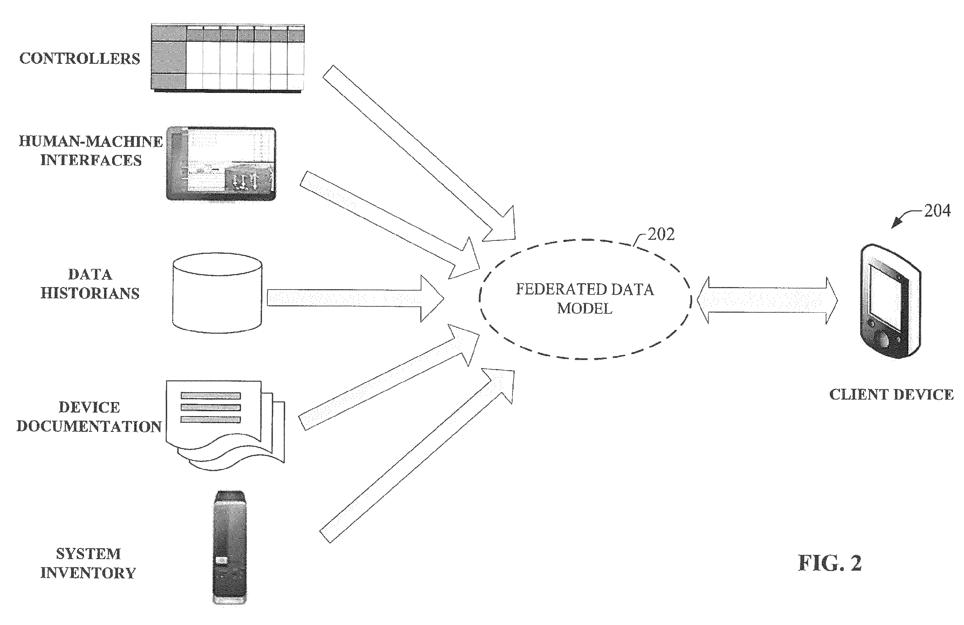

To address these and other issues, one or more embodiments of the present disclosure provide an industrial data discovery and indexing system that discovers available data items across multiple heterogeneous data platforms that make up an industrial enterprise and indexes the data items in a unified searchable namespace. The discovery and indexing system can be a component of a multi-platform industrial search system that allows a user to search multiple disparate industrial data platforms for information of interest. The discovery and indexing system unifies plant-wide control system information from multiple diverse sources under a common namespace, or federated data model. FIG. 2 is a conceptual diagram illustrating this industrial data federation. In one or more embodiments, the discovery and indexing system indexes data from multiple sources both across the industrial facility and external to the facility, including but not limited to industrial controllers, HMIs, intelligent industrial devices, data historians, device and system documentation repositories (e.g., drawings, manuals, knowledgebase articles, etc.), system inventory management systems, computer-based control applications (e.g., enterprise resource planning systems, batch process management systems, etc.), batch software, product control software, structured query language (SQL) databases that interact with the control system, and/or other such platforms. The system indexes and correlates this multi-platform data to yield a federated data model 202 that can be accessed and searched by a client device 204.

In an example scenario, client device 204 may submit a search request for a particular data tag (e.g., *Tank1*) to the federated data model 202. Based on the indexed plant-wide information recorded in the model, the industrial search system can locate all instances of the specified data tag across the disparate data sources and deliver a list of all discovered instances categorized according to data platform. For example, the search system may provide a categorized search result list that includes a first list of discovered references to the data tag in one or more industrial control programs (e.g., ladder logic, sequential function charts, etc.), and a second list of discovered instances of the data tag being displayed on one or more HMI screens. In response to selection of a search result in the industrial controller list result, the search system remotely launches an instance of the appropriate controller development application on the client device and navigates to the portion of the control program (e.g., a ladder logic rung) corresponding to the selected instance. Likewise, selection of a search result in the HMI result list causes the search system to launch a runtime instance of the HMI visualization application on the client device, and to navigate to the display screen corresponding to the selected instance.

The discovery and indexing system can build and maintain federated data model 202 automatically or semi-automatically in a number of ways. In some embodiments, the system can deploy a discovery agent on the plant network. The discovery agent may comprise, for example, a software script that crawls the network to discover industrial devices and other data sources - both internal to the plant as well as external sources - containing available data items. The discovery agent can report the discovered data items to the discovery and indexing system, which converts the data to a common searchable format, contextualizes the data using predefined or automatically generated tags, identifies any interdependencies between the data items, and indexes the data in the federated data model for subsequent searching. In another scenario, some industrial devices compatible with the indexing system may push information regarding their available data items to the system for tagging and indexing.

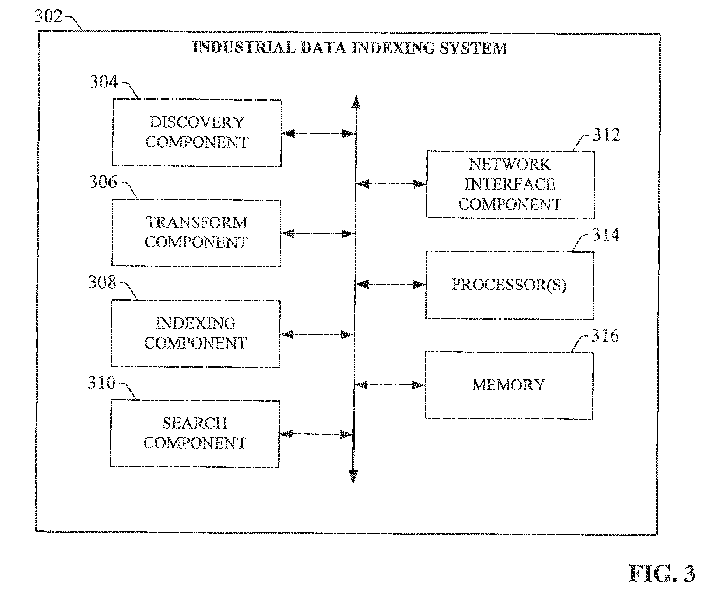

FIG. 3 is a block diagram of an example industrial data indexing system 302 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

Industrial data indexing system 302 can include a discovery component 304, a transform component 306, an indexing component 308, a search component 310, a network interface component 312, one or more processors 314, and memory 316. In various embodiments, one or more of the discovery component 304, transform component 306, indexing component 308, search component 310, network interface component 312, the one or more processors 314, and memory 316 can be electrically and/or communicatively coupled to one another to perform one or more of the functions of the industrial data indexing system 302. In some embodiments, components 304, 306, 308, 310, and 312 can comprise software instructions stored on memory 316 and executed by processor(s) 314. Industrial data indexing system 302 may also interact with other hardware and/or software components not depicted in FIG. 3. For example, processor(s) 314 may interact with one or more external user interface devices, such as a keyboard, a mouse, a display monitor, a touchscreen, or other such interface devices.

Discovery component 304 can be configured to gather information from one or more industrial automations and other data sources both internal and external to an industrial environment. The discovery component 304 can also be configured to discover interdependencies between the data items. Transform component 306 can be configured to transform and tag the data discovered by the discovery component prior to indexing. This can include, for example, transforming heterogeneous data items discovered on different types of data platforms to a homogeneous format for indexing under a common namespace, tagging the discovered data with relevant contextual information - e.g., a plant, production area, machine, or device on which the data was discovered; a relationship or interdependency between a given data item and another data item; a data platform corresponding to the data item (e.g., industrial control program, HMI application, knowledgebase article, device documentation, etc.) - or other data modifications. The indexing component 308 can be configured to generate a federated data model (e.g., federated data model 202) defining locations and sources of data items throughout the industrial system, as well as relationships between the data items, based on the discovered and transformed data. The resulting federated data model is capable of identifying and reporting sources of specific data items or tags, as well as relevant contextual data relating to a specified data item.

Search component 310 can be configured to submit search queries to the federated data model and retrieve search results identifying locations of requested data items throughout the industrial system. Search component 310 can be configured to classify the search results according to the platform of the respective data sources on which the results were found (e.g., control logic, HMI, etc.), as well as the network and/or physical location (e.g., production area) in which the information is located. For search results corresponding to web content (e.g., vendor knowledgebase websites), the search component 310 can generate links that facilitate direct navigation to the web content. Network interface component 312 can be configured to exchange information between the industrial data indexing system 302 and a plant network and/or external network (e.g., a public network such as the Internet). This communication can include, for example, deployment of data discovery agents and receipt of discovered data items from the discovery agents or directly from data sources themselves.

The one or more processors 314 can perform one or more of the functions described herein with reference to the systems and/or methods disclosed. Memory 316 can be a computer-readable storage medium storing computer-executable instructions and/or information for performing the functions described herein with reference to the systems and/or methods disclosed.

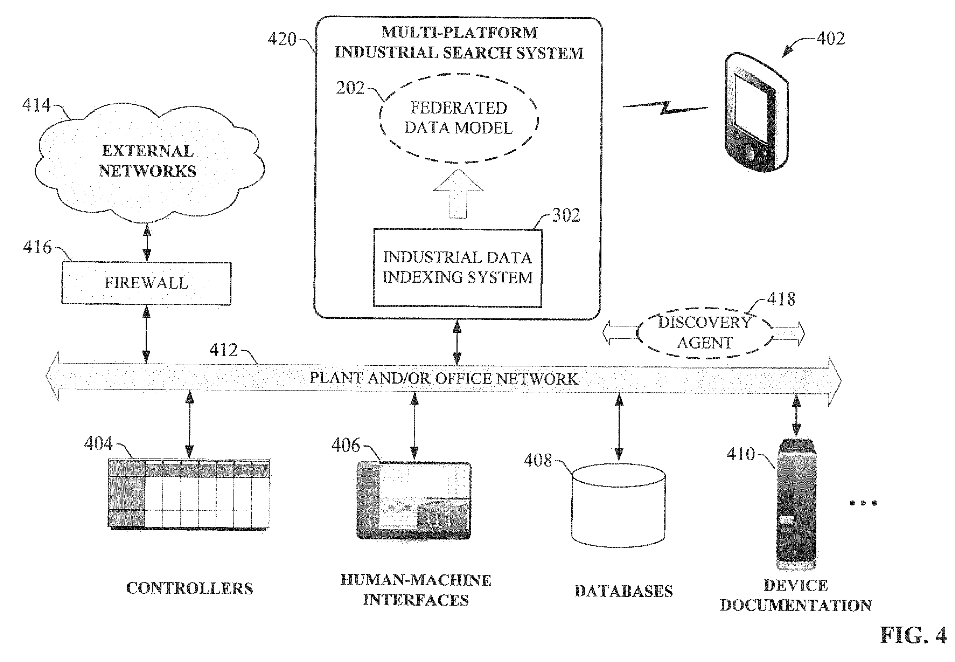

FIG. 4 is a block diagram of a generalized example architecture including a multi-platform industrial search system 420 that uses industrial data indexing system 302 to discover and index multi-platform data throughout an industrial environment. The example industrial environment depicted in FIG. 4 includes one or more industrial controllers 404, HMIs 406, databases 408 (e.g., data historians, employee databases, inventory databases, etc.), and device documentation repositories 410. The industrial environment may also include other sources of industrial data not depicted in FIG. 4, including but not limited to product inventory tracking systems, work order management systems, etc. Data sources 404-410 reside on a plant and/or office network 412. In some scenarios, data sources 404-410 may be distributed across multiple networks within the plant facility; e.g., a plant network and an office network communicatively connected through a firewall device or other network infrastructure device. Network 412 may also have access to external networks 414 such as the Internet (e.g., via firewall 416).

Industrial data indexing system 302 - which also resides on network 412 as part of the multi-platform industrial search system 420 in this scenario - discovers and indexes data items that are available in the disparate data sources 404-410 as well as on the external networks 414. Industrial data indexing system 302 also indexes relationships between the data items. This can include, for example, recording instances of the same data item residing in multiple data sources (e.g., recording that a data tag corresponding to a particular temperature measurement within one of the industrial controllers 404 corresponds to a data tag within one of the HMIs 406 for displaying the temperature measurement on a display screen), observing that values of certain data items are a function of other data items (e.g., an output coil associated with a first data tag in a ladder logic program is set based on a value of a second data tag used as an output condition for the rung), or other such relationships.

To facilitate discovery and indexing, the industrial data indexing system 302 can deploy a discovery agent 418 on the plant network 412, which traverses the network and discovers data sources (e.g., industrial devices, knowledge bases, device documentation storage devices, work schedules, maintenance record databases, electronic communication records, etc.) and the data items available on each data source. In some embodiments, the discovery agent 418 can also traverse external networks 414 to discover relevant external sources of data, including but not limited to vendor websites or knowledgebases. The discover agent 418 can return information describing the discovered data to the industrial data indexing system 302 for processing and indexing within the federated data model. In this way, the industrial data indexing system 302 automatically inventories a customer's industrial environment by discovering the industrial assets in use and their associated available data items. Industrial data indexing system 302 can also discover relevant data on data sources residing on the external networks 414, including but not limited to device or machine vendor documentation, relevant online knowledgebase articles, vendor product release information, etc.

Industrial data indexing system 302 records the indexed information (that is, the discovered plant-wide data items and their relationships) as a federated data model 202, which can be remotely accessed and searched by a client device 402 to locate desired data items. Client device 402 can be any mobile device (e.g., mobile phone, laptop computer, tablet computer, wearable computer, etc.) or fixed location computer (e.g., desktop computer, server, operator interface, etc.) capable of remotely accessing search system 420. In some embodiments, multi-platform industrial search system 420 may be implemented on a web server, allowing client device 402 to access the federated data model via an Internet connection. The search system 420 may also be implemented on a networked local server accessible by the client device 402 via a wireless network connection. In yet another scenario, the search system 420 may be implemented on a cloud platform, where the search system executes as a cloud-based service.

In an example scenario, client device 402 may submit a search query for a particular data item (e.g., a data tag name) to the search system 420, which initiates a search of the federated data model 202 to facilitate location of the specified data item. The search system 420 then returns a list of search results to the client device 402 identifying all discovered locations of the data item across the various data sources 404-410. The system can classify the results according to type of data source (e.g., data platform) in which the result was found. In some embodiments, the system can also classify the results according to location within the plant environment (e.g. production line, workcell, etc.). For example, the results may include a first list of controller logic results identifying control logic rungs on which the desired data item is referenced, and a second list of HMI screen results identifying HMI screens on which the desired data item is displayed. When a search result is selected at the client device 402, the search system can also remotely launch the appropriate platform-specific application for viewing the selected result (e.g., an HMI viewer, a control logic viewing/development environment, an electronic document reader, etc.).

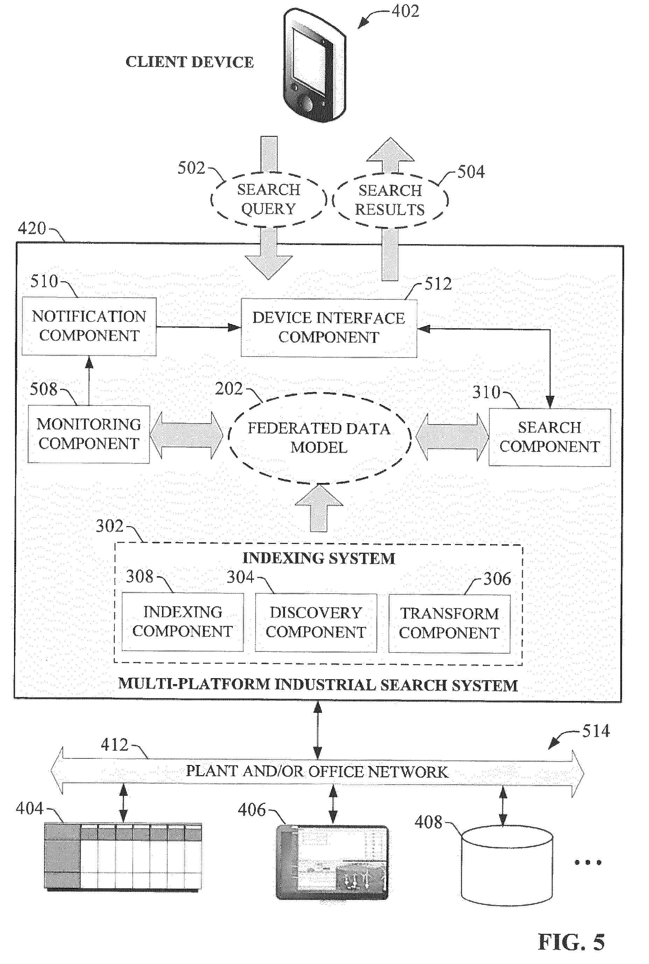

FIG. 5 is a block diagram illustrating components of the multi-platform industrial search system 420 in more detail. In some embodiments, the search system may be implemented on a server or other computing device that resides on plant and/or office network 412. In other embodiments, the search system 420 may be implemented on a web server, allowing client devices to remotely search the federated data model 202 via a web connection. In still other embodiments, the search system may be implemented as a cloud-based service that executes on a cloud platform, as will be discussed in more detail herein.

Indexing system 302 - comprising discovery component 304, transform component 306, and indexing component 308 - collects information about available data items distributed across a customer's industrial environment, and generates federated data model 202 representing a searchable unified view of the discovered data. The indexing system 302 is configured to discover data items on multiple disparate platforms, including but not limited to industrial controllers 404, HMIs 406, databases 408, electronic documentation libraries, inventory tracking systems, work order management systems, etc. As will be described in more detail herein, the indexing system 302 can discover available data items by deploying discovery agents 418 on network 412. These agents traverse network 412 and identify devices in use throughout the plant, as well as the data items or tags, applications, and configuration information associated with those devices. Since a given industrial environment typically comprises a heterogeneous collection of devices of different types and vendors, and the data made available by these devices may comprise many different data types (e.g., controller tags, HMI tags, alarms, notifications, events, data values, tabular data, logs, configuration settings, diagnostic values, alarms, HTML pages, etc.), indexing system 302 can manage and deploy device-specific or platform-specific agents configured to extract and analyze information from specific types of devices or data platforms (e.g., controllers, HMIs, etc.). Some device-specific discovery agents can be configured to locate application project files stored on particular device types (e.g., configuration and/or program files on an industrial controller, screen configuration files on an HMI, etc.), and extract relevant information about the devices based on analysis of data contained in these project files. By leveraging device-specific and platform-specific agents, the indexing system 302 can discover and index data conforming to many different formats and platforms.

In order to unify this disparate heterogeneous data under a common platform for collective searching, the discovery agents can transform the collected data to a format understandable by the indexing system 302 (e.g., extensible markup language or other format), and the indexing system 302 can index this transformed data using a common indexing format compatible with the common search platform. The indexing system 302 then encodes this normalized representation of the discovered data in the federated data model 202. By unifying the distributed data under this unified search platform, the system can allow client devices to search the plant-wide data without knowledge of the rules or protocols for reading the various data source platforms (e.g., industrial controllers, HMIs, etc.). In addition to discovery of devices and their associated data via discovery agents deployed on the plant network, some embodiments of indexing system 302 can also be configured to receive uploaded configuration information from devices that support self-identification functionality, as will be described in more detail herein.

Indexing system 302 can also discover and record relationships - both explicit and inferred - between discovered data items. In some embodiments, the indexing system 302 may record these relationships by tagging discovered data items and building the search index based on these tags, such that related data items share common tags. In some scenarios, these tags may be explicitly defined by a system developer such that the indexing component determines which predefined tags should be applied to newly discovered data items.

Using some or all of these techniques, the indexing system 302 can automatically build a model of the customer's industrial environment, including the disparate and multi-platform devices in use throughout the plant, their associated available data items, and relationships between these data items. This eliminates the need for plant personnel to have full knowledge of the industrial assets in use throughout the plant, since indexing system 302 can automatically inventory a given industrial environment and record discovered devices and data in federated data model 202.

Once created by the indexing system 302, federated data model 202 can be searched by monitoring component 508 and search component 310. Search component 310 is configured to search federated data model 202 in response to a search query 502 submitted by a client device 402. Client device 402 can exchange data with the multi-platform industrial search system 420 via device interface component 512, which may comprise a wired or wireless network interface, a near-field communication interface, or other such device interface suitable for the particular platform on which the search system is implemented. In some embodiments, device interface component 512 may be configured to verify an authorization of the client device 402 to access the search system prior to allowing search queries to be submitted by the client device. The device interface component 512 may authenticate the client device or its owner using password verification, biometric identification, cross-referencing an identifier of the client device with a set of known authorized devices, or other such verification techniques.

In some embodiments, the device interface component 512 may be configured to serve an interface display or dashboard to the client device 402 when the client device requests access to the search system 420. The interface display can include interface elements that allow the user of client device 402 to manually enter and submit a search query 502 to the search system 420. For example, the display may allow the user to enter a keyword, term, or phrase as a search criterion. Example search terms may include identifiers of specific devices or machines, names of production areas within the plant, product names or codes, employee names, or other such criteria. In addition to manually entered search criteria, some embodiments of the device interface component 512 can be configured to translate barcodes or Quick response (QR) codes affixed to devices or machines. For example, a user may scan or photograph a barcode or QR code attached to a device, machine, or product (e.g., a pin-stamped or laser-etched barcode affixed to a workpiece during the production process) using client device 402, wherein the barcode contains identification information about the associated component. The client device 402 can then submit identification information extracted from the barcode to the device interface component 512 as a search criterion. In yet another example, client device 402 may extract information about an industrial device or its associated process directly from the device via near field communication (NFC) and submit the extracted information to the device interface component 512. This extracted information can include, but is not limited to, a device identifier, device status information read from a status word maintained on the industrial device, alarm data extracted from an alarm register, production statistics stored on one or more data tags, or other such information.

Upon receipt of search query 502, device interface component 512 routes the query to search component 310, which searches federated data mode 202 for content relevant to the search query. Search query 502 may comprise, for example a data tag name (e.g., *Tank1*), a device or machine attribute, a device vendor, a name of a particular area of the industrial environment (e.g., a workcell or production line), a product name or identifier, or other such search criteria. Search component 310 searches the federated data model 202 for the search criteria identified by the search query 502, identifies data items corresponding to the search criteria, and returns a list of search results 504 to the client device via device interface component 512. Since the search results 504 may correspond to data items found on multiple disparate platforms throughout the plant environment (e.g., industrial controllers, HMIs, device documentation repositories, etc.), the device interface component classifies the results according to the platforms on which the results were found, location of the results within the plant environment (e.g., production area, workcell, etc.), or other classification criteria.

In addition to processing search queries submitted by a user via a client device, some embodiments of the multi-platform industrial search system can also support automated dynamic searching. To this end, multi-platform industrial search system 420 may include a monitoring component 508 configured to monitor one or more performance or operational metrics of an industrial system to identify issues requiring attention by an operator or maintenance expert. In response to detection of a performance or operational issue, the monitoring component 508 can perform an automated search of federated data model 202 to collect search results relevant to the detected issue. A notification component 510 can then deliver a notification of the detected issue together with the relevant search results to one or more client devices associated with selected plant personnel determined to be best suited to address the issue.

In an example embodiment, monitoring component 508 may monitor selected data items of industrial system 514 according to defined monitoring rules. The monitoring rules can define, for example, which data tags of the various data platforms distributed across industrial system 514 are to be monitored, as well as criteria indicative of performance issues that, when determined to be true, will trigger an automated search and personnel notification. The monitoring rules can also define which employees are to be notified in response to each type of detected performance issue.

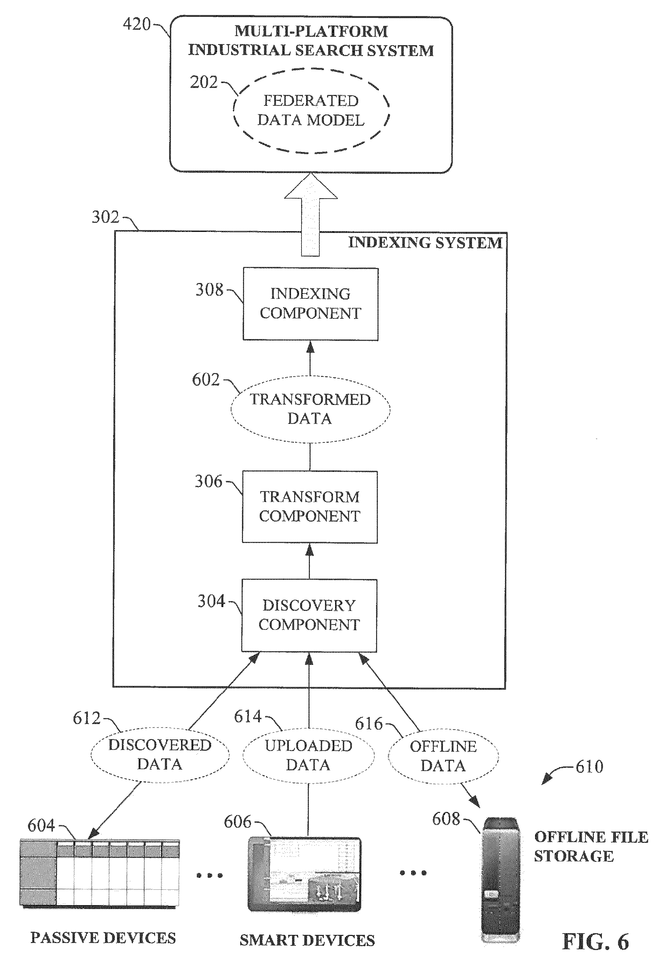

FIG. 6 is a block diagram that illustrates processing performed by the industrial data indexing system 302. A given industrial environment may comprise a diverse, heterogeneous set of data sources 610. In order to unify the data available on these sources under a common namespace for search purposes, the discovery component 304 can be configured to discover data in a number of ways. Some devices within the plant environment may be passive devices 604, which only provide information regarding their available data items in response to a request from the discovery component 304 of the indexing system 302. Such a request may be initiated by the discovery agent 418 (see FIG. 4).

In an example scenario, when the discovery agent 418 discovers a new data source during traversal of the plant network, the agent will examine the data source to identify the data items on that device that are eligible for indexing in the federated data model 202. If the discovered data source is an industrial controller, for example, the available data items may comprise data tags or registers defined by the industrial controller's configuration and programming file. The discovery agent can also identify how and where the data items are used in the industrial controller's program (e.g., ladder logic, sequential function chart, structured text, etc.) so that this information can be indexed as well. For example, upon discovery of the industrial controller on the plant network, the discovery agent 418 may subsequently identify a tag named *Tank1* defined in the controller's program file, representing a particular tank of an industrial batch process. In response to discovering this tag, the discovery agent can scan the control program to identify the routines and program locations (e.g., ladder logic rungs) on which *Tank1* is referenced. The discovery agent 418 can also identify how each instance of *Tank1* is used at each program location (e.g., output coil, normally open contact, function block argument, etc.).

The discovery agent may additionally identify other data items defined in the industrial controller that have a functional relationship with *Tank1*. For example, upon identifying a reference to *Tank1* on an output coil of a rung of the control program running on the industrial controller, the discovery agent 418 can then identify the other data values and statuses defined on that rung that control the state of the *Tank1* output coil, and record this relationship between *Tank1* and each of the other data values and statuses. In some embodiments, the discovery agent 418 can perform additional scans of the control program to determine additional data values and statuses that affect the states of each of the related data items, since those additional data values/statuses also affect the status of the *Tank1* output coil. The discovery agent 418 may iteratively cycle through the control program multiple times in this fashion in order to discover all relevant data items having a functional relationship with Tank1.

In another example, the discovered data source may be an interface terminal executing an HMI application for visualizing a controlled process. In this scenario, the discovery agent may identify the terminal and proceed to scan the tag list defined in the HMI application to identify the data tags referenced by the HMI. These data items can include HMI tags linked to data tags of a networked industrial controller for display of associated controller data values or statuses on one or more of the HMI screens, or for writing values to the controller tags via an input object rendered on an HMI screen (e.g., a data entry field, a virtual push-button, etc.). For each discovered HMI tag, the discovery agent can identify the display screens on which the HMI tag is registered, as well as the external controller tags corresponding to the HMI tag. In some scenarios, the HMI tag may be identified by the same name as the corresponding controller tag (e.g., *Tank1*), although this may not always be the case.

The discovery agent 418 can package the information collected as described above - including an identity of the data source and its type (e.g., industrial controller, HMI, knowledgebase, device documentation, etc.), data items discovered on the data source, locations of the data items within an application running on the data source (e.g., routine and rung of a ladder logic program, HMI screen, etc.), correlations between the data items, etc. - and send this information back to the discovery component 304 as discovered data 612. Since the discovery agent 418 is capable of performing appropriate analysis on a number of different types of data platforms (e.g., industrial controller, HMI, device documentation, etc.) in order to identify the data platform and its available data, the discovery agent 418 may pre-format the discovered data 612 to conform a format compatible with the industrial data indexing system 302 prior to returning the discovered data 612 to the discovery component 304. In this way, the discovery component 304 and its associated discovery agent can automatically normalize heterogeneous data from diverse data formats into a common, homogeneous format that can be collectively processed and indexed by the indexing system.

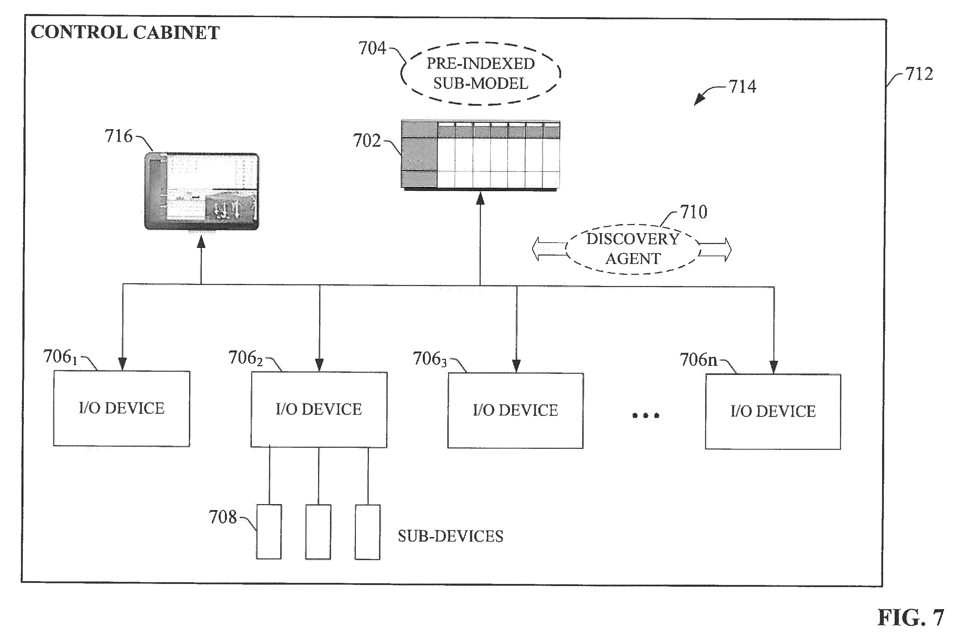

While the previous examples described the discovery agent as being deployed by a discovery component of a centralized indexing system that is part of a multi-platform industrial search system, some sub-systems within a customer's larger plant environment may be pre-discovered prior to deployment within the larger industrial enterprise. For example, in some embodiments the indexing system may be implemented on an industrial device, such as an industrial controller, which deploys a discovery agent to discover devices and data that reside under that device (e.g., devices that are controlled by, or provide data to, the industrial controller), as well as the configurations, data, and interdependencies associated with these devices. FIG. 7 is a diagram illustrating creation of a pre-indexed sub-model 704 using indexing functionality implemented on an industrial controller 702. In this example, industrial controller 702 is mounted in a control cabinet 712 as part of a control system 714 to be installed at a plant facility. The control system 714 is housed in control cabinet 712, which may have been designed and built by an original equipment manufacturer (OEM), a systems integrator, or other machine builder to fulfill a customer order.

Control system 714 may comprise a number of I/O devices 706 (e.g., motor drives, sensors or other telemetry devices, solenoid valves, remote I/O modules, etc.) interfaced with the industrial controller 702. The I/O devices 706 may be hardwired to the industrial controller's I/O modules, or may exchange data with the industrial controller 702 over a local network (e.g., EthernetIP, common industrial protocol, etc.). In addition, one or more of the I/O devices 706 may have a number of sub-devices 708 connected thereto. For example, if an I/O device is a remote I/O module, sub-devices 708 may comprise the I/O devices connected to that remote I/O module. The control cabinet 712 may also include an HMI terminal 716 for visualizing the machine or process being controlled by the control system 714. The HMI terminal 716 is communicatively connected to the industrial controller 702 over a local network connection or an interface cable.

Since industrial controller 702 is implemented with indexing functionality, the controller can pre-discover the available devices and data within the control cabinet 712 before the control system 714 is installed at the customer facility. For example, the indexing system can examine the controller's configuration, tag list, and programming information to identify some or all of the I/O devices 706 and sub-devices 708 connected to the controller, data items that are available on the controller, the location of the data items within the controller's program routines, interdependencies between the data items, etc. In addition, the industrial controller 702 can deploy a discovery agent 710 on its local network to discover additional devices and available data below the controller level. For example, the discovery agent 710 can identify the HMI terminal 716 connected to the industrial controller 702, identify the available data tags defined by the HMI application running on the terminal as well as the interface screens on which each data item is referenced, correlations between one or more of the HMI tags and corresponding tags defined in the industrial controller 702, etc. The discovery agent 710 reports this information to the indexing system on the industrial controller 702 for indexing.

In a similar fashion, the discovery agent 710 traverses other accessible devices below the controller level and reports discovered devices and data back to the controller's indexing system. In this regard, some I/O devices 706 - particularly those I/O devices that are hardwired to the industrial controller's I/O modules - may be discoverable without deploying discovery agent 710 by simply examining the I/O module configuration information defined on the industrial controller, since this I/O module configuration information specifies the devices connected to each point of the I/O modules. For I/O devices that are networked to the industrial controller 702 - which may include devices capable of operating autonomously or semi-autonomously and which may contain additional data items that are not made available to the industrial controller 702 (e.g., vision systems, barcode stamping systems, barcode reader systems, etc.) - the discovery agent 710 can discover and analyze these devices and report the available data items back to the controller's indexing system.

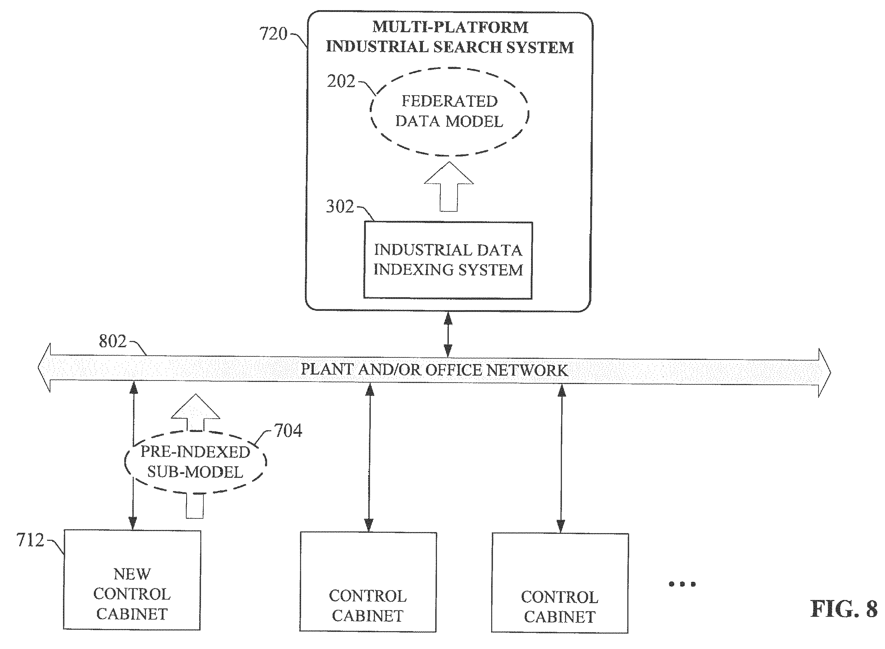

The industrial controller 702 leverages the discovered data to generate a pre-indexed sub-model 704, which represents the control system 714 and its available data. As illustrated in FIG. 8, when the control cabinet 712 is installed at the customer facility, the industrial controller 702 establishes communication with the pre-existing industrial data indexing system 302 over plant network 802 and sends the pre-indexed sub-model 704 to the indexing system 302 for integration with the customer's existing federated data model 202. By implementing an indexing system on an industrial device, a machine builder can provide a machine and associated control system with its portion of the namespace model pre-discovered and indexed as a sub-model, which can be quickly integrated with the customer's larger plant model.

Although the example described above in connection with FIGs. 7 and 8 depicts the indexing functionality as being implemented on an industrial controller, this functionality can also be implemented on other control system devices, including but not limited to an HMI, motor drive, or other device.

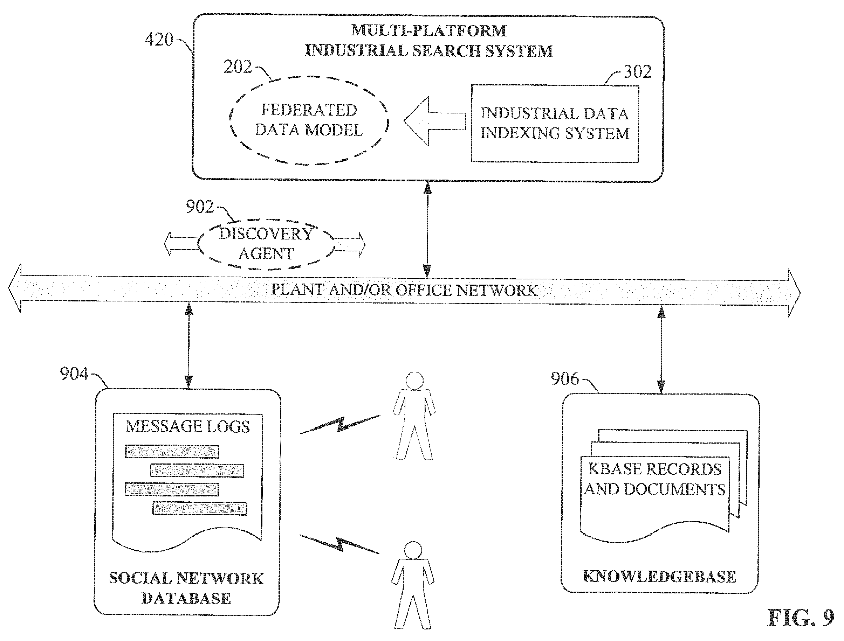

In some embodiments, the discovery agent may also be configured to examine social networks used by plant employees in order to generate tags based on instant messaging discussions relating to a project or troubleshooting issue. FIG. 9 is a diagram illustrating an architecture in which discovery agent 902 collects and indexes message log information. In this example, a social network database 904 stores written communications between plant personnel. The written communications may comprise instant message logs, e-mail threads, text records, or other communication records. During data discovery, the discovery agent 902 can identify the social network database 904 and parse the stored message logs for keywords that may be used to associate the message logs with a particular work area, machine, process, or device. For example, the discovery agent 902 may determine, based on discovery of particular keywords within a message log, that a particular stored conversation was generated in connection with troubleshooting a particular machine or industrial device. Accordingly, the discovery agent 902 can report the presence of the message log to the discovery component with an instruction to tag the message log as being relevant to the machine or device. In this way, when a subsequent search is performed on the federated data model 202 for the machine or device, the message log will be returned as a relevant result. These logs may detail steps taken by maintenance personnel in connection with solving a particular issue with the machine or device, and are therefore flagged by the system as a relevant result when a search is performed on that machine or device.

In some embodiments, the discovery agent 902 may associate relevant supplemental information with a discovered message log based on keyword analysis of the log. For example, the customer may maintain a knowledgebase 906 on the plant or office network containing knowledgebase records and/or device documentation relating to particular devices or maintenance issues. Upon determining that a message log relates to a troubleshooting session for a particular machine or device, the discovery agent 902 (or discovery component 304) may generate an association between the log and a knowlegebase record or device document relating to that machine or device. Thus, when a search is subsequently performed for the machine or device, the search system can present a message log outlining steps taken in the past to address a maintenance issue pertaining to the machine/device, with links to relevant knowledgebase articles or device documents to provide supplemental information.

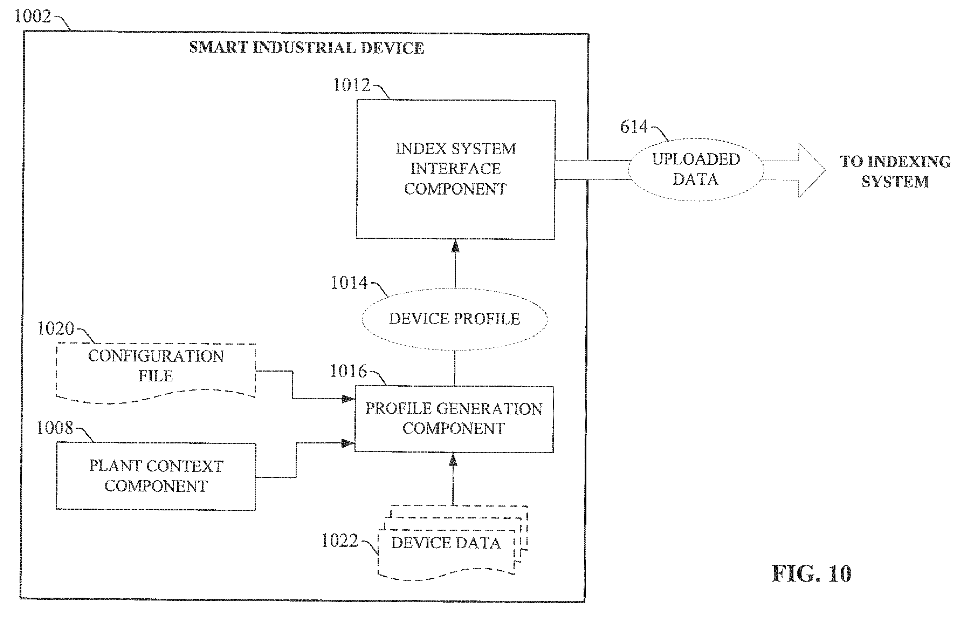

Returning now to FIG. 6, in addition to passive devices 604, the industrial environment may include one or more smart devices 606 having integrated self-reporting functionality. Such devices can provide uploaded data 614 regarding their identity and available data items to the indexing system 302 directly without the need for analysis by a discovery agent. Turning to FIG. 10, an example smart device capable of self-reporting to indexing system 302 is illustrated. Smart device 1002 - which may comprise substantially any type of industrial device or data storage unit (e.g., an industrial controller, an HMI terminal, a motor drive, device documentation storage, etc.) - includes an index system interface component 1012 configured to communicatively couple smart device 1002 to the indexing system 302 and exchange data therewith; e.g., via a plant network or over a public network such as the Internet (for configurations in which the indexing system resides on a web server or cloud platform).

When smart device 1002 is installed as part of an industrial automation system, index system interface component 1012 can establish communication with the indexing system 302. In one or more embodiments, the index system interface component 1012 can be configured to auto-discover the indexing system 302 on the common network. For example, the smart device 1002 may be pre-configured with the identification of the indexing system to which the device is to provide its identity and configuration information (e.g., a name associated with the indexing system, a machine identifier, a cloud or web address, etc.), or may be configured to perform a search of the plant network for compatible industrial indexing and search systems that may be present on the network. Any suitable handshaking protocol may be used to establish communication between the smart device 1002 and the indexing system.

Upon discovery of the search system, the smart device 1002 can package and send relevant information about the device and its available data to the indexing system, which integrates the reported data items in federated data model 202. In some embodiments, a profile generation component 1016 can generate a device profile 1014 for smart device 1002 to be sent to the indexing system 302 via index system interface component 1012. Device profile 1014 can convey information about smart device 1002, including but not limited to an identity and type of the device, device data 1022 available on the device, a context of the device within the industrial environment, any built-in displays or dialog screens (e.g., HTML pages) that provide access to the device's data, etc. In some embodiments, profile generation component 1016 may collect configuration information encoded in a configuration file 1020 stored on the smart device 1002, which may be a control program, a configuration or parameters settings file, an application file (e.g., an HMI application or HTML page), or other such file. The profile generation component 1016 can also identify available device data 1022 on the device (e.g., real-time or historical data tags, etc.). In some embodiments, the profile generation component 1016 can also identify relationships between the data items using techniques similar to those used by the discovery agent, including but not limited to the iterative relationship discovery process described above. The profile generation component 1016 can package this information into a device profile 1014, which is then sent to the indexing system as uploaded data 614 by index system interface component 1012.

Some embodiments of smart device 1002 may also include a plant context component 1008 configured to collect additional contextual information about the smart device 1002 for delivery to indexing system 302. Plant context component 1008 can determine a context of smart device 1002 within the plant or enterprise environment. For example, one or more embodiments of plant context component 1008 can identify other devices and systems within its local environment and make a determination regarding a location of smart device 1002 within a hierarchical plant context or device topology. Some embodiments of the federated data model may represent a given industrial enterprise in terms of multiple hierarchical levels and device hierarchies, where each level comprises units of the enterprise organized as instances of types and their properties. Plant context component 1008 can gather information that facilitates locating its associated smart device 1002 within an organizational or device hierarchy in a number of ways. In one example, plant context component 1008 can identify a topology of devices sharing a common network with smart device 1002 and interconnections between the devices. For example, if smart device 1002 is an industrial controller, plant context component 1008 can identify one or more discrete or analog I/O devices connected to the controller (e.g. based on a configuration file 1020 that defines the I/O module configurations for the controller). In addition, plant context component 1008 can identify other controllers on the network and their role within the overall industrial enterprise (*e.g*., the production areas, workcells, or processes associated with the respective controllers). In some embodiments, plant context component 1008 can also determine an identity of a particular network (e.g., a network name) to which smart device 1002 is attached. This information can be leveraged (either by profile generation component 1016 or an external application) to determine the device's location and role within the industrial automation system, since some networks may be dedicated to a particular production area. Some embodiments of plant context component 1008 may also identify a type of machine to which smart device 1002 is connected (e.g., a palletizer, wrapper, conveyor, etc.).

By gathering information about the local device topology, plant context component 1008 can facilitate identifying a location of smart device 1002 within the enterprise hierarchy. In some embodiments, this determination of the location within the enterprise hierarchy can be made by plant context component 1008 itself. Alternatively, profile generation component 1016 can include information gathered by plant context component 1008 in device profile 1014 so that the indexing system 302 can accurately represent smart device 1002 within the enterprise or device hierarchy.

Some smart devices may also store pre-defined interface screens (e.g., HTML screens) used for device configuration or visualization of operational data. The indexing system can detect these screens (either using the discovery agent or based on information in the device profile 1014 provided by the device) and index these screens in the federated data model 202.

Returning to FIG. 6, the indexing system 302 may also collect and index offline data about certain industrial devices rather than gather information about the devices directly from the devices themselves. In this regard, some industrial devices may have information about their configuration, programming, and available data items captured and stored as offline files stored on separate offline file storage devices 608. Accordingly, one or more embodiments of the discovery agent 418 can identify and process these offline files in a similar manner as described above in order to index these devices in the federated data model.

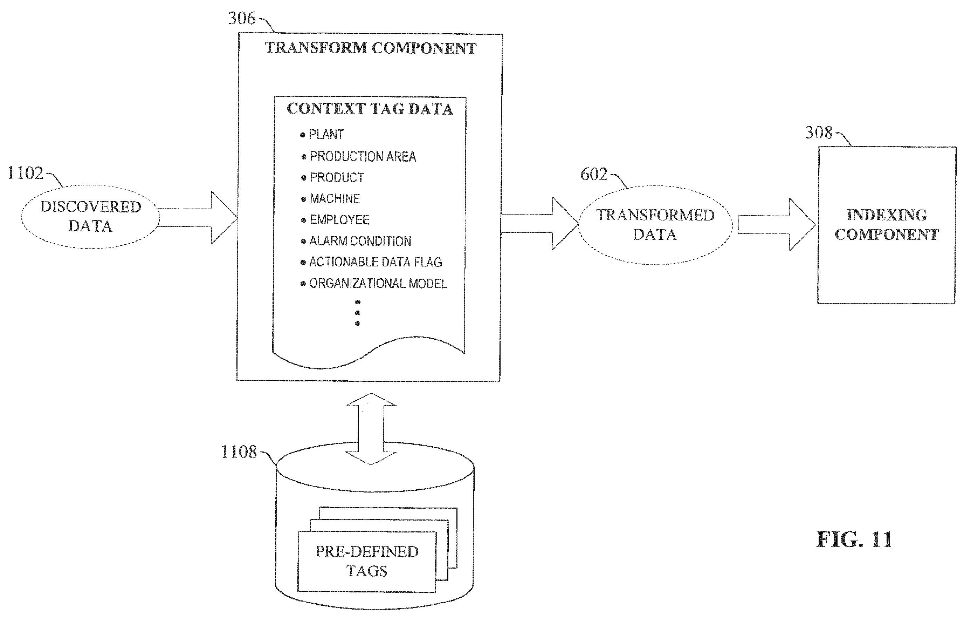

Transform component 306 can perform any necessary transformation on the data collected by discovery component 304 prior to indexing. This can include, for example, normalizing any data that was not appropriately formatted by the discovery agent 418, so that all collected data accords to a common format usable by the indexing system 302. In some embodiments, transform component 306 can also add contextual data or tags to the collected data items to achieve highly granular indexing for search purposes, as well as to facilitate subsequent discovery of interdependencies between the diverse and plant-wide data items. FIG. 11 is a block diagram illustrating transformation of discovered data 1102 by transform component 306. As noted above, the discovery agent 418 (or discovery component 304) may add some contextual information to the discovered data items prior to sending the data to transform component 306. However, in some cases the transform component 306 may be able to add additional context to this data based on information not available to the discovery agent 418. In other scenarios, the discovery agent 418 may not have been able to contextualize all the discovered data due to limited available information about a given device (e.g., in the case of an older legacy device with limited capabilities).

Contextual data that can be added by transform component 306 for a given data item can include, but is not limited to, an identifier of a plant and/or production area at which the source of the data item resides; a machine or product to which the data item relates; one or more employees to be associated with the data item (e.g., based on the production area, shift during which the data item was collected, etc.); a concurrent alarm condition determined to be relevant to the discovered data item; an actionable data flag indicating that the value of the collected data item requires a response from plant personnel; or a tag indicating the location of the data time within the context of a hierarchical organizational model of the plant (e.g., in terms of an enterprise level, plant level, work area level, machine level, control level, etc.).

In some embodiments, the transform component 306 can selectively tag discovered data items with one or more pre-defined tags 1108 defined in association with the indexing system 302. These tags may be used to contextualize the discovered data based on one or more user-defined tag categories based on tagging rules. For example, the user may define a tagging rule indicating that data collected from data sources within a particular workcell or machine of the plant are to be tagged with a pre-defined tag that associates the data items with a person, product, or other classifier for indexing and searching purposes. The tags 1108 allow the user to define relationships between sets of data that may not be automatically discoverable by the discovery component 304 and its associated discovery agents. In some embodiments, the indexing system may also be configured to maintain a user-defined system view that allows a user to selectively associate different devices under a combined unit of organization. This user-defined association can subsequently be used by the search system to ensure that all relevant devices are located in response to a search query. For example, when one device (and its associated data) is located within the logical hierarchy of the system defined by the federated data model in response to a search query, other devices having a user-defined association with the located device will also be identified and retrieved as a relevant search result. In some embodiments, these user-defined associations may also be made between selected data items stored on different devices (data-level associations), as well as between the device's themselves (device-level associations).

In some embodiments, the transform component 306 may also auto-generate tags for a given data item based on contextual information, including but not limited to rung comments associated with a controller tag, learned interdependencies between a newly discovered data item and a previously discovered data item (e.g., learn that *Pump5* is associated with *Tank1,* and tag *Pump5* as being associated with *Tank1,* or tag both *Tank1* and *Pump5* according to the larger system in which they operate), or other discovered contextual information. The indexing component 308 can associate similarly tagged data items in the federated data model 202 regardless of the platform in which they were discovered. For example, the indexing component 308 can associate common or related data items discovered, respectively, in an industrial controller, an HMI, and a data historian.

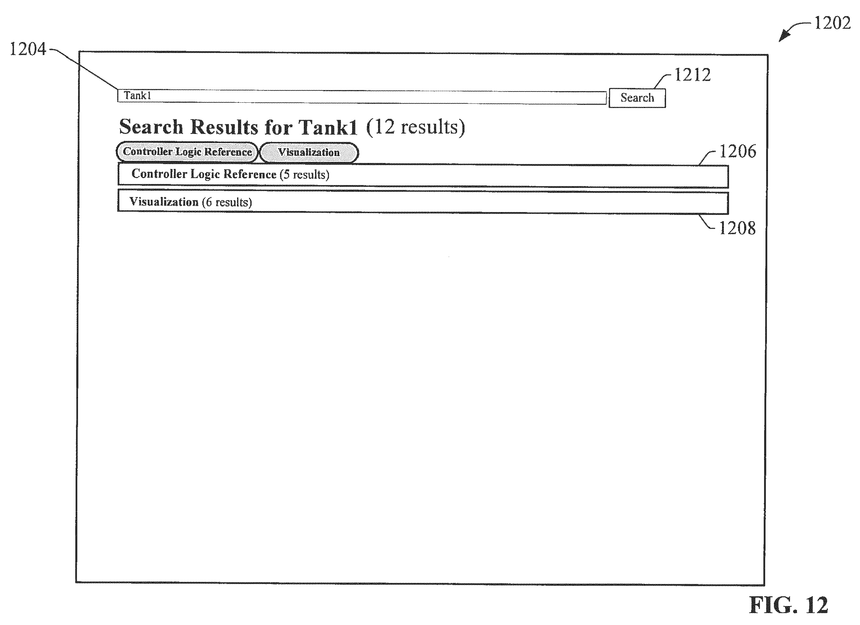

Returning now to FIG. 6, the transform component 306 provides the transformed data 602 to indexing component 308, which indexes the discovered data and interdependencies therebetween in federated data model 202. The multi-platform industrial search system 420 can then be used to submit search queries to the federated data model 202, as described above in connection with FIG. 5. FIG. 12 illustrates an example search result screen 1202 that can be delivered by multi-platform industrial search system 420 is illustrated. In this example, a search for a tag named *Tank1* has been submitted to the system. The search is initiated by entering the tag name in the search window 1204 and operating search button 1212. In response to the query, search component 310 identifies all instances of *Tank1* recorded in federated data model 202, representing all known locations of or references to data items named *Tank1* throughout the plant. In this example, 12 instances are discovered - five instances of *Tank1* referenced within controller logic, and six references to *Tank1* on one or more HMI applications (visualization platforms). These results are segregated between two collapsible result lists - a controller logic reference list and a visualization reference list.

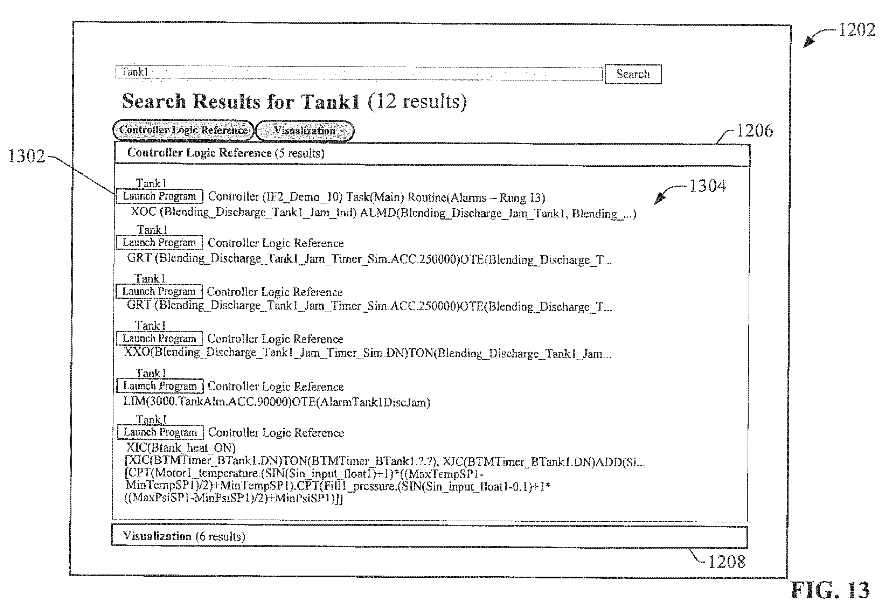

Selection of the controller logic reference list header 1206 expands and makes visible the list of controller logic reference results 1304, as shown in FIG. 13. Each item in the list of controller logic reference results 1304 identifies a control logic rung on which the *Tank1* data tag is referenced. In this example, each result identifies the controller (e.g., IFT_Demo_10), routine (e.g., "Alarms"), and rung (e.g., "Rung 13") on which the tag is referenced. Each result also identifies additional context for the reference, such as type of logic element associated with the *Tank1* reference (e.g., normally open contact, normally closed contact, output coil, GRT function block, etc.). In some embodiments, each item in the controller logic reference results 1304 may include an embedded image of the particular rung in its graphical form, including rung comments found in the source logic program to provide additional information and context about the result prior to user selection.

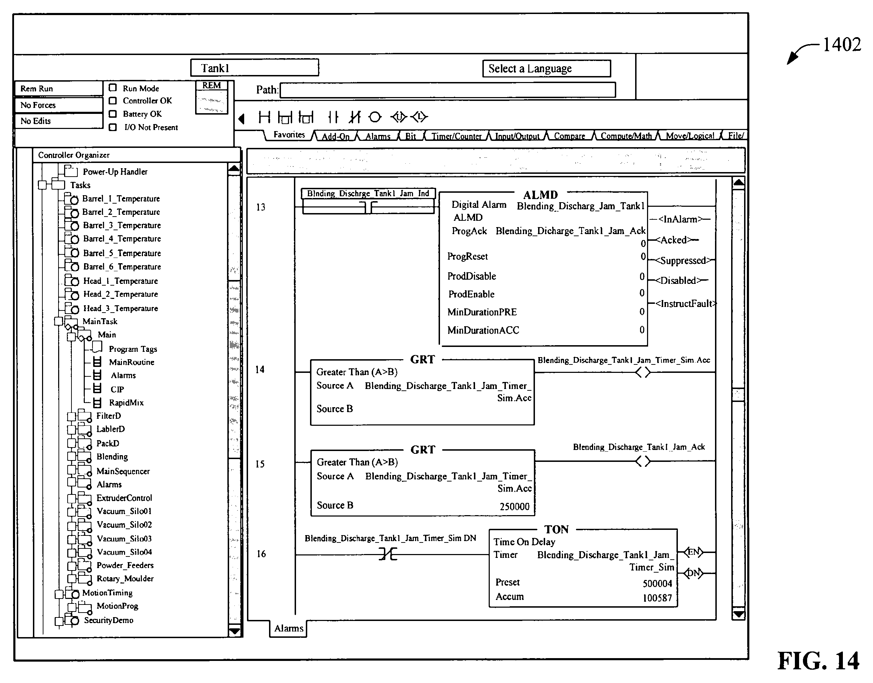

Each result also includes a "Launch Program" button 1302. Selection of a "Launch Program" button 1302 causes the search system to launch an appropriate program or application for viewing the selected result in context on the client device. In the present example, selection of a "Launch Program" button 1302 corresponding to one of the controller logic reference results causes the search system to launch a controller logic viewing and/or development environment on the client device, as shown in FIG. 14. The search system also navigates to the location within the controller logic corresponding to the selected search result. That is, after launching the controller logic application 1402, the system navigates to the particular controller program, routine, and rung number corresponding to the selected instance of *Tank1*. The controller logic application 1402 provides a runtime view of the selected logic program on the client device, including live rung statuses and tag data values. In some embodiments, the live data for animating the runtime presentation of the controller logic can be routed to the client device by the search system 420. In such embodiments, the search system may establish a communicative link between the client device 402 and the selected industrial controller, allowing real-time data read from the controller's data table to be passed to the client device 402 to drive the runtime presentation of the controller logic.

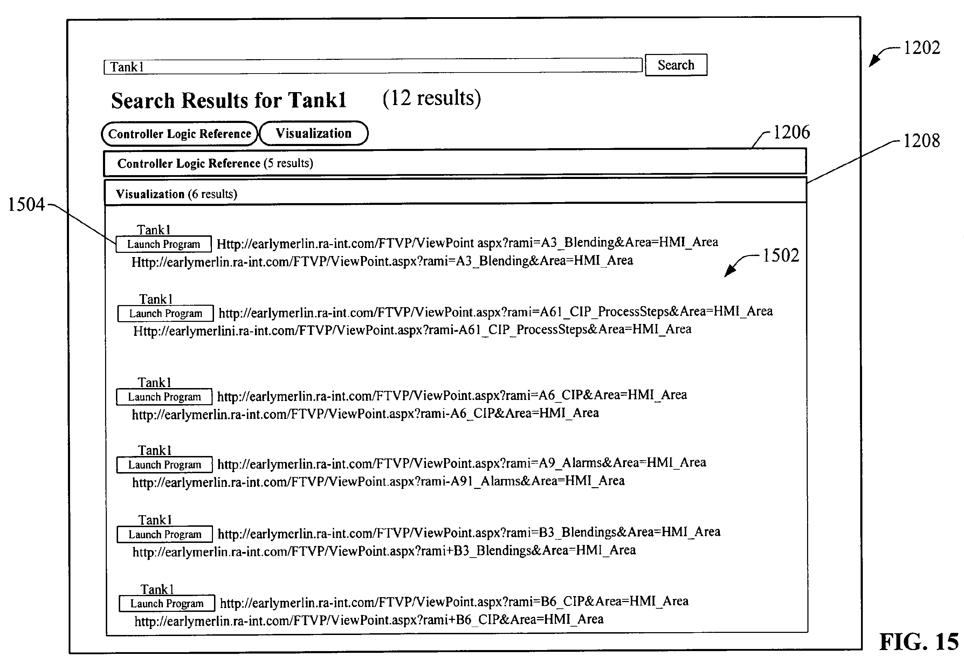

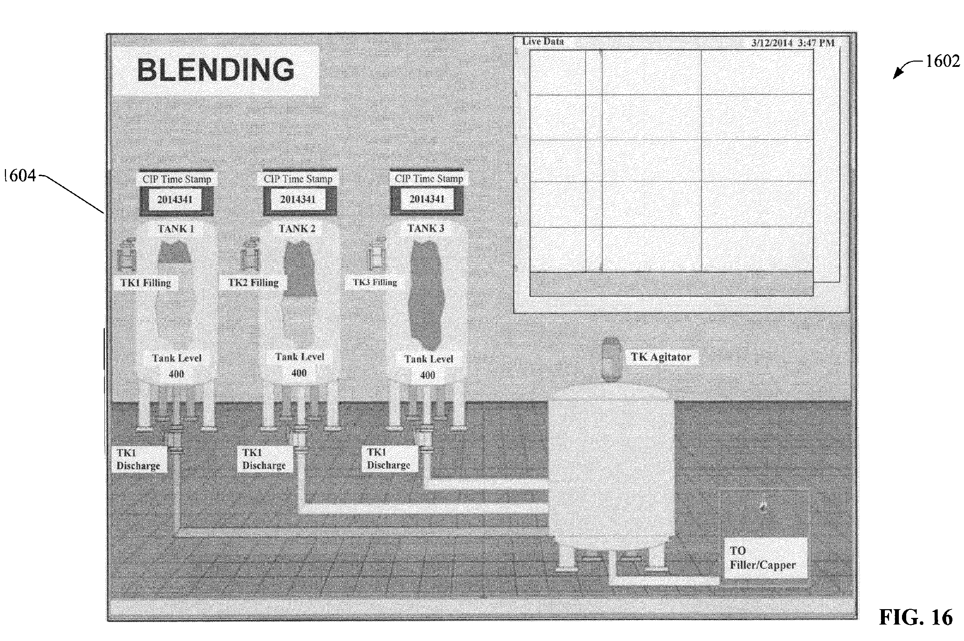

As shown in FIG. 15, selection of the visualization reference list header 1208 expands and makes visible the visualization result list 1502. Similar to the list of controller logic reference results 1304, each result in the visualization result list 1502 identifies the HMI location for the corresponding *Tank1* reference. In particular, each result identifies the HMI application and interface screen on which the *Tank1* data tag is referenced. In some embodiments, each item in the visualization result list may include a thumbnail image of the corresponding HMI screen to provide context. Selection of a "Launch Program" button 1504 next to one of the visualization reference results causes the search system to launch the appropriate visualization program on the client device for viewing the selected HMI display screen. FIG. 16 illustrates an example HMI screen 1602 invoked by selection of a "Launch Program" button 1504. In this example, HMI screen 1602 includes a graphic 1604 for Tank 1, which includes an animated tank level graphic, a numeric tank level indicator, and an animated discharge valve for the tank. As with the controller logic application described above, HMI screen 1602 provides a live runtime view of the process being visualized on the client device, where the animation and numeric displays are driven using real-time data retrieved by the search system and delivered to the client device. Launching of applications by the search system is discussed in more detail herein.

It is to be appreciated that additional platform-specific result categories not depicted in FIGs. 12-16 are also possible according to one or more embodiments. for example, as noted above, some device may include built-in web pages (e.g., HTML pages) used to view and/or modify device configuration, operational, or diagnostic information. These built-in device interfaces may be located and presented as another category of search results. Selection of the "Launch Program" button for one of these links would link the user to the appropriate built-in configuration page. In another example, device documentation may be presented as a category of results, wherein selection of one of these categories launches the appropriate document viewer for opening and displaying the selected document.

As noted above, one or more embodiments of the search system can also access off-premise data sources, including but not limited to web-based content (e.g., vendor knowledgebases or technical notes). Moreover, some embodiments of the search component 310 may be configured to correlate local search results (that is, search results located on data sources within the plant facility) with information available on web-based data sources. For example, if a local search result relates to a particular model of industrial device, the search component 310 may search external web-based data sources for additional information about that device (e.g., knowledgebase articles, on-line documentation, technical notes, information regarding the latest firmware revision for the device, etc.). The search component 310 can then present links to these external search results in association with the appropriate local search results.

In one or more embodiments, the search component 310 may also be configured to filter search results based on a current location of the client device 402 from which the search query was received. According to such embodiments, upon determining a set of search results in response to a search query, the search system may determine the location of the client device 402 (or the user of client device 402; e.g., using a location tracking badge carried by the user) and present only a subset of the total search results determined to be relevant to the user's present location. For example, if the user is determined to be located near a particular production line or within a particular workcell, the search component 306 may identify the subset of search results corresponding to industrial devices or machines located within that section of the plant facility.

To ensure that the federated data model 202 is kept current, the discovery component 304 can be configured to deploy one or more discovery agents periodically in order to identify newly added devices or newly available data items. In some embodiments, the discovery component 304 may be configured to deploy discovery agents in response to detection of a new device added to the plant network.

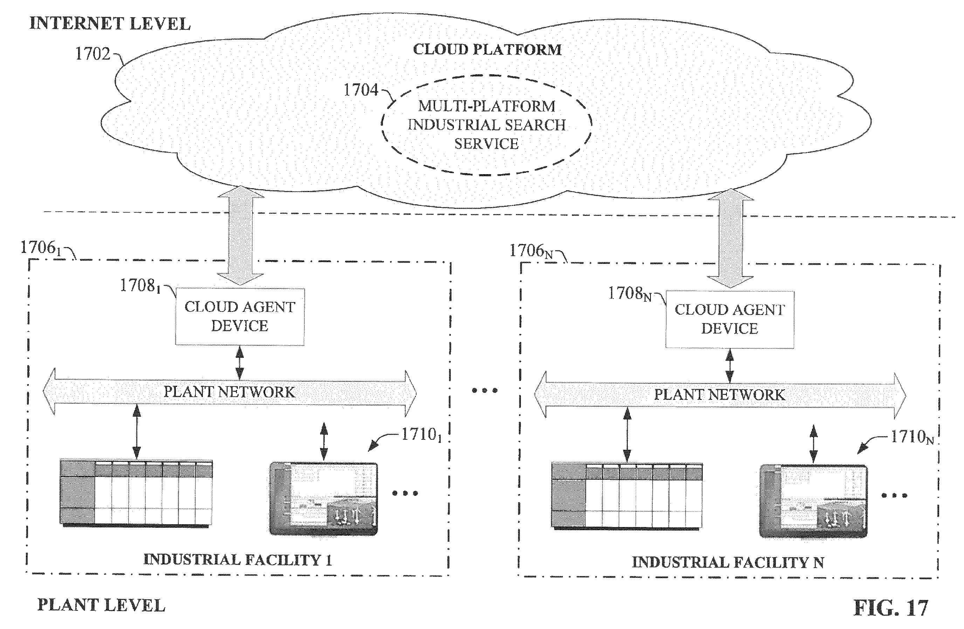

As noted above, one or more embodiments of the multi-platform industrial search system can be implemented on a cloud platform. FIG. 17 is a conceptual diagram of a generalized cloud-based implementation for the industrial search system described herein. In this implementation, the multi-platform industrial search system executes as a cloud-based service 1704 on cloud platform 1702, allowing industrial data from multiple geographically diverse industrial facilities (e.g., industrial facilities 1706₁-1706_{N}) to be indexed under a common federated data model for collective searching. This cloud-based implementation also allows a user to access the industrial search service 1704 from substantially any location.

Cloud platform 1702 can be any infrastructure that allows industrial search service 1704 to be accessed and utilized by cloud-capable devices. Cloud platform 1702 can be a public cloud accessible via the Internet by devices having Internet connectivity and appropriate authorizations to utilize the industrial search service 1704. In some scenarios, cloud platform 1702 can be provided by a cloud provider as a platform-as-a-service (PaaS), and the industrial search service 1704 can reside and execute on the cloud platform 1702 as a cloud-based service. In some such configurations, access to the cloud platform 1702 and the industrial search service 1704 can be provided to customers as a subscription service by an owner of the industrial search service 1704. Alternatively, cloud platform 1702 can be a private or semi-private cloud operated internally by the enterprise, or a shared or corporate cloud environment. An example private cloud can comprise a set of servers hosting the industrial search service 1704 and residing on a corporate network protected by a firewall.

If cloud platform 1702 is a web-based cloud, cloud agent devices 1708 at the respective industrial facilities 1706 may interact with industrial search service 1704 directly or via the Internet. In an example configuration, the industrial devices 1710 connect to the on-premise cloud agent devices 1708 through a physical or wireless local area network or radio link. In another example configuration, the industrial devices 1710 may access the cloud platform 1702 directly using integrated cloud agents.

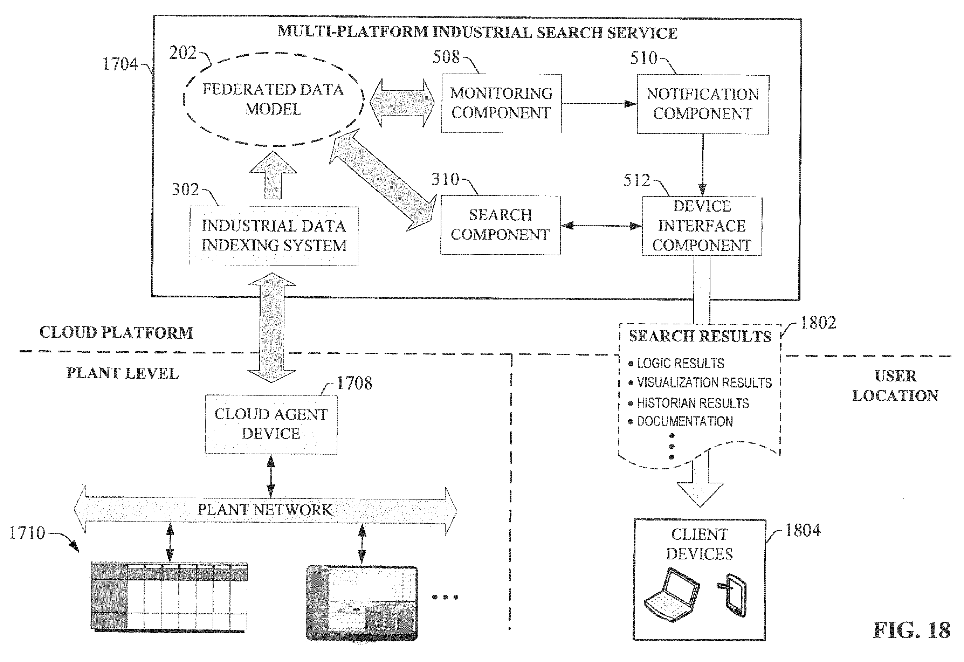

FIG. 18 is a block diagram illustrating a cloud-based industrial search service in more detail. As described in previous examples, industrial data indexing system 302 generates federated data model 202, which indexes and correlates multi-platform industrial data and documentation from on-premise industrial devices 1710. In this cloud-based implementation, the indexing system 302 may interface with the industrial devices 1710 via cloud agent device 1708. In some embodiments, cloud agent device 1708 may serve as a gateway between cloud-based indexing system 302 and industrial devices 1710 on the plant floor, allowing the indexing system 302 to discover, correlate, and index the multi-platform data items using techniques similar to those described above. For example, the indexing system 302 may deploy discovery agents to the plant network via the cloud agent device 1708 to facilitate discovery and indexing of devices and data available on the network. In this cloud-based implementation, data discovery can be performed across geographically diverse plant facilities 1706. As a result, federated data model 202 represents a unified representation of the devices and data available across multiple plant facilities.

Monitoring component 508, notification component 510, and search component 310 perform similar functions to those described above in connection with FIG. 5. In this cloud-based implementation, device interface component 512 exchanges data with authorized client devices 1804 via the cloud platform. This can include receiving requests from the client devices 1804 for access to the industrial search service 1704 and verifying that the client devices 1804 are authorized to access and use the service (e.g., using password verification, biometric verification, etc.). Authorized client devices 1804, which can be located either within or outside the plant facility, can submit search queries to and receive search results 1802 from the cloud-based industrial search service 1704 as described in previous examples. Moreover, the monitoring component 508 can monitor one or more data items on industrial devices 1710 in accordance with defined monitoring rules, initiate defined automated searches in response to determinations that the monitored data satisfies criteria defined by the monitoring rules, and instruct notification component 510 to deliver suitable notifications to specified plant personnel, as described in previous examples. Since the notification service is implemented in a cloud platform, the system can deliver these notifications to client devices at any location with access to the Internet (e.g., wired, wireless, cellular, etc.).

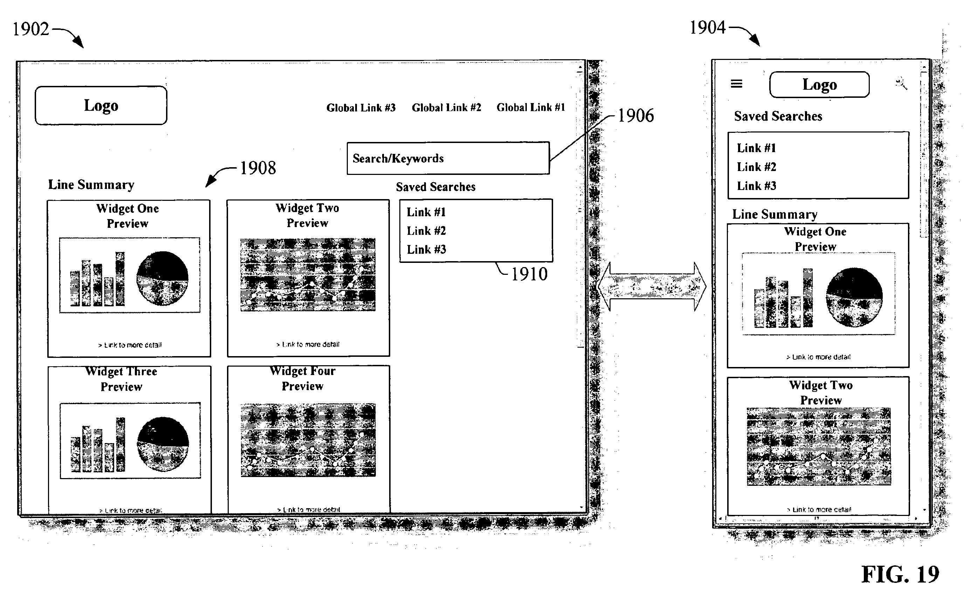

In some embodiments, the industrial search system allows users to customize the home screen delivered to their client device by device interface component 512. FIG. 19 is an example home interface screen 1902 that can be served to a client device by industrial search system 420. Home interface screen 1902 includes a search window 1906 for entering and submitting manual searches to the industrial search system. The system allows the user to save previously submitted searches in a "Saved Searches" list 1910, allowing the user to re-submit searches without the need to manually re-enter the search keywords in search window 1906. The user may also configure their home interface screen 1902 to display information summaries 1908 of selected aspects of their industrial systems. These summaries can be configured as alphanumeric data displays, graphical status indicators, bar graphs, pie charts, line graphs, or other suitable presentation format. In some embodiments, the home interface screen 1902 can also contain selected HMI screens or controller logic screens with active data animation. Since the industrial search system serves interface displays to disparate types of client devices having different sizes and display aspect ratios, the system can automatically scale and arrange screen content to fit the display parameters of the client device on which the screen is being displayed. For example, home interface screen 1902 may be suitable for display on a laptop or tablet computer. If the user invokes home interface screen on a mobile phone, the search system may deliver a reformatted display screen 1904, which conforms to the size and aspect ratio of that device.

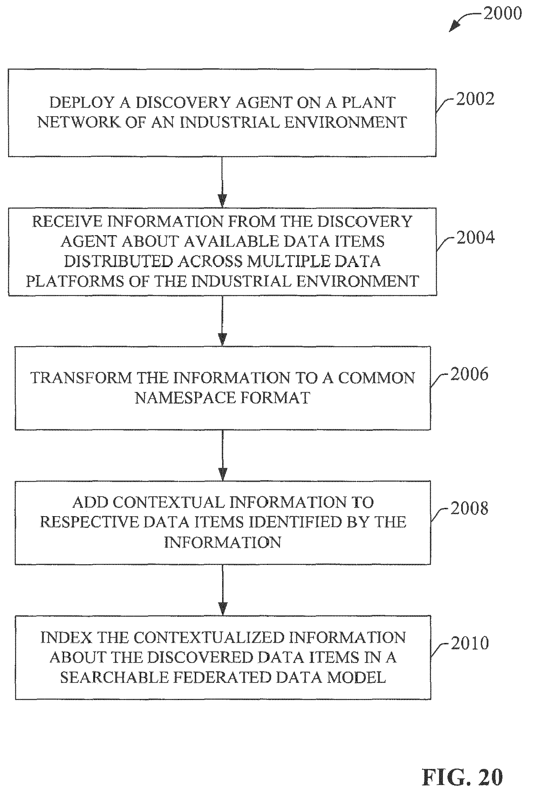

FIGs 20-22 illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 20 illustrates an example methodology 2000 for identifying and indexing multi-platform data in an industrial environment. Initially, at 2002, a discovery agent is deployed on a plant network of an industrial environment. The discovery agent can be deployed, for example, by a discovery component of an industrial data indexing system that operates in conjunction with an industrial search system. The indexing and searching systems may be implemented as one or more stand-alone servers, one or more web servers, a cloud platform, or as another implementation. At 2004, information is received from the discovery agent about available data items distributed across multiple data platforms of the industrial environment. In some embodiments, the discovery agent can navigate the plant network and collect information regarding devices and systems in use (e.g., industrial controllers, HMIs, motor drives, documentation repositories, inventory tracking systems, etc.), and the available data associated with each device or system. The discovery agent can also identify correlations between data items across the various devices and data platforms (e.g., identifying that a data tag referenced on a particular rung of a control logic program is also referenced on a display screen of an HMI).

At 2006, the information received from the discovery agent is transformed to a common namespace format if the data was not already provided in this format. At 2008, contextual information is added to respective data items identified by the information. This contextual information may include, for example, a plant, production area, machine, or device on which the data was discovered; a relationship or interdependency between a given data item and another data item; a data platform corresponding to the data item (e.g., industrial control program, HMI application, knowledgebase article, device documentation, etc.), one or more employees having an association with the data items, or other such information. At 2010, the contextualized information about the discovered data items is indexed in a searchable federated data model.

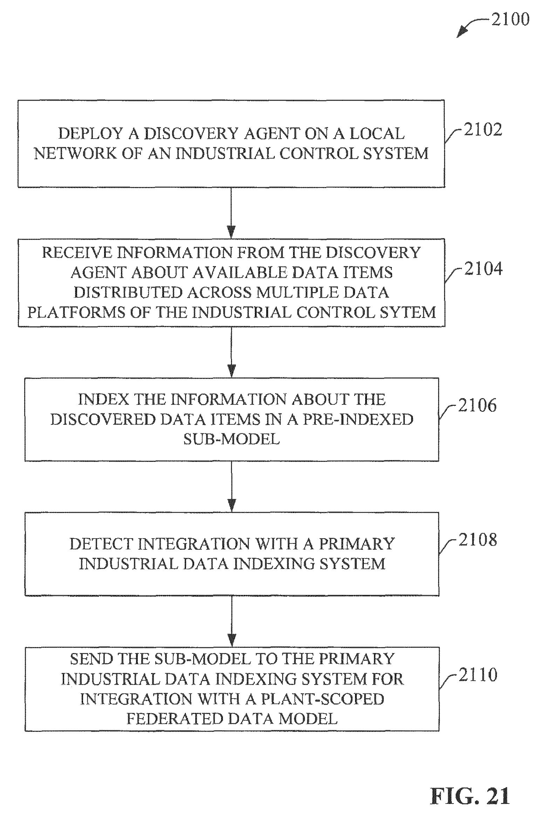

FIG. 21 illustrates an example methodology 2100 for pre-indexing available data items of an industrial control system prior to deployment in a plant facility. Initially, at 2102, a discovery agent is deployed on a local network of an industrial control system. The industrial control system may comprise, for example, an integrated control system housed in one or more control cabinets to be installed at a customer's plant facility. In some embodiments, the discovery agent may be deployed by an industrial data indexing system embodied on an industrial controller of the industrial control system. At 2104, information is received from the discovery agent about available data items distributed across multiple data platforms of the industrial environment, including but not limited to information relating to the data tags, I/O module configurations, and control programming on the industrial controller itself, data tags defined in an HMI application of an operator interface terminal installed in the control cabinet, any discovered interdependencies between discovered data items, listings of parameters or attributes on a device (e.g., variable frequency drive parameters, communication module configuration settings), web pages stored on the devices for accessing stored data or parameters, etc. At 2106, the discovered data items and interdependencies are indexed in a pre-indexed sub-model based on the information received at step 2104.

At 2108, integration with a primary industrial data indexing system is detected. For example, upon installation of the control cabinet at the plant facility, the indexing system of the industrial controller may discover the primary industrial indexing system on the shared plant network. Upon establishing communication with the primary indexing system, the sub-model is sent to the primary indexing system for integration with a plant-scoped federated data model at step 2110.

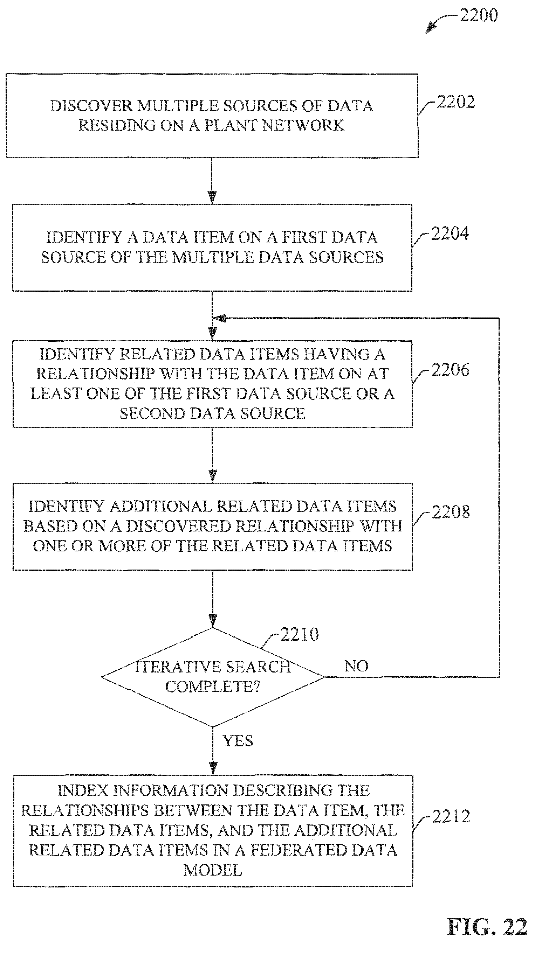

FIG. 22 illustrates an example methodology 2200 for discovering and indexing relationships between items of multi-platform industrial data. Initially, at 2202, multiple sources of data residing on a plant network are discovered. These data sources can comprise, for example, industrial controllers, HMI terminals, motor drives, knowledgebases, device documentation repositories, inventory databases, or other such data sources. The data sources may be discovered, for example, by a discovery component of an industrial data indexing system. At 2204, a data item is identified on a first data source of the multiple data sources. The data item may comprise, for example, a reference to a data tag on one or more rungs of a ladder logic program executing on an industrial controller (a first platform), a data tag referenced on one or more display screens of an HMI (a second platform), or another such data item.

At 2206, one or more related data items having a relationship to the data item are identified on at least one of the first data source or a different second data source. This may comprise, for example, identifying one or more other data tags that affect the data item of interest (e.g., statuses of other devices, measured process variables involving other devices, etc.). At 2208, one or more additional related data items are identified that have a relationship with the related data items identified at step 2206. For example, once a number of related data items that affect the state of the data item of interest are discovered at step 2206, additional related data items that indirectly affect the state of the data item of interest by controlling the states of the related data items (e.g., statuses of other devices, measured process variables involving other devices, etc.) may be identified at step 2208. In this way, all relevant data items having a functional relationship with the data idem identified at step 2204 can be discovered.

The data discovery process can perform iterative searches on these newly discovered additional related data items until a defined completion criterion is met. Accordingly, at 2210, a determination is made regarding whether the iterative search is complete (e.g., based on satisfaction of the completion criterion). If the iterative search is not complete, the methodology returns to step 2206 and an additional search for related data items is performed using the specified data item and the additional related data items as search criteria. In this way, the search system iteratively cycles through the available data sources on the plant network until all relationships determined to be relevant to specified data item are found.

If it is determined at step 2210 that the iterative search is complete, information describing the relationships between the data item, the related data item, and the additional related data items is indexed in a searchable federated data model for subsequent searching at step 2212.

Embodiments, systems, and components described herein, as well as industrial control systems and industrial automation environments in which various aspects set forth in the subject specification can be carried out, can include computer or network components such as servers, clients, programmable logic controllers (PLCs), automation controllers, communications modules, mobile computers, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, instrumentation, and human machine interface (HMI) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, and Ethernet/IP. Other networks include Ethernet, DH/DH+, Remote I/O, Fieldbus, Modbus, Profibus, CAN, wireless networks, serial protocols, near field communication (NFC), Bluetooth, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

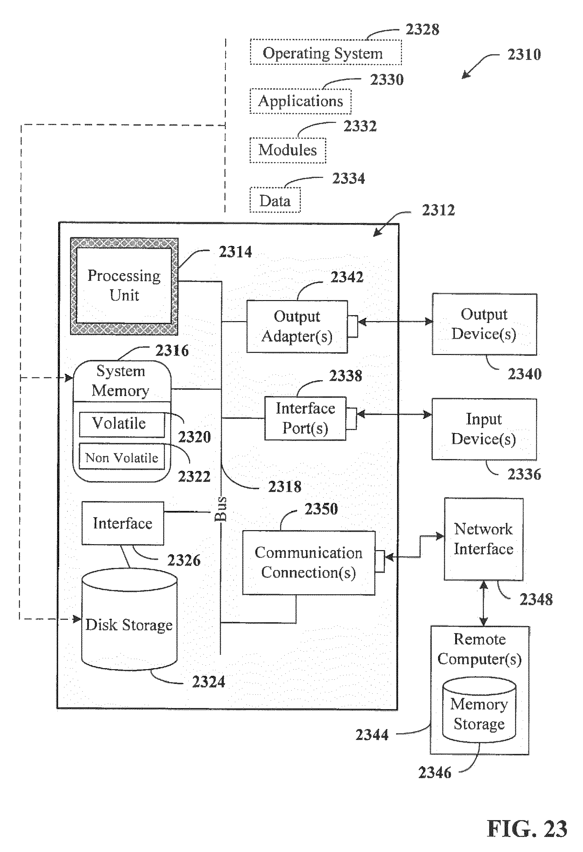

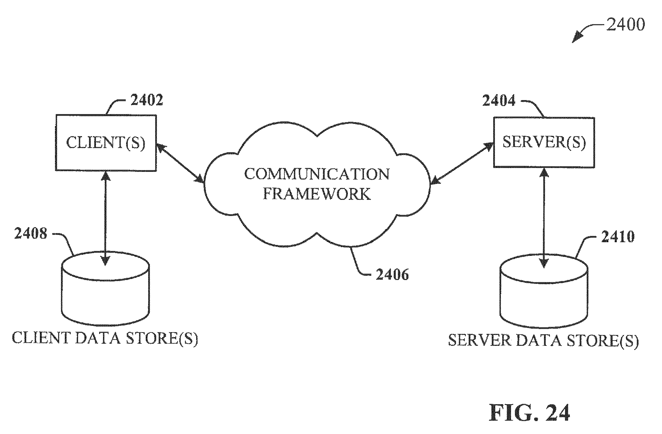

In order to provide a context for the various aspects of the disclosed subject matter, FIGs. 23 and 24 as well as the following discussion are intended to provide a brief, general description of a suitable environment in which the various aspects of the disclosed subject matter may be implemented.

With reference to FIG. 23, an example environment 2310 for implementing various aspects of the aforementioned subject matter includes a computer 2312. The computer 2312 includes a processing unit 2314, a system memory 2316, and a system bus 2318. The system bus 2318 couples system components including, but not limited to, the system memory 2316 to the processing unit 2314. The processing unit 2314 can be any of various available processors. Multi-core microprocessors and other multiprocessor architectures also can be employed as the processing unit 2314.

The system bus 2318 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 2316 includes volatile memory 2320 and nonvolatile memory 2322. The basic input/output system (BIOS), containing the basic routines to transfer information between elements within the computer 2312, such as during start-up, is stored in nonvolatile memory 2322. By way of illustration, and not limitation, nonvolatile memory 2322 can include read only memory (ROM), programmable ROM (PROM), electrically programmable ROM (EPROM), electrically erasable PROM (EEPROM), or flash memory. Volatile memory 2320 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 2312 also includes removable/non-removable, volatile/nonvolatile computer storage media. FIG. 23 illustrates, for example a disk storage 2324. Disk storage 2324 includes, but is not limited to, devices like a magnetic disk drive, floppy disk drive, tape drive, Jaz drive, Zip drive, LS-100 drive, flash memory card, or memory stick. In addition, disk storage 2324 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 2324 to the system bus 2318, a removable or non-removable interface is typically used such as interface 2326.

It is to be appreciated that FIG. 23 describes software that acts as an intermediary between users and the basic computer resources described in suitable operating environment 2310. Such software includes an operating system 2328. Operating system 2328, which can be stored on disk storage 2324, acts to control and allocate resources of the computer 2312. System applications 2330 take advantage of the management of resources by operating system 2328 through program modules 2332 and program data 2334 stored either in system memory 2316 or on disk storage 2324. It is to be appreciated that one or more embodiments of the subject disclosure can be implemented with various operating systems or combinations of operating systems.

A user enters commands or information into the computer 2312 through input device(s) 2336. Input devices 2336 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 2314 through the system bus 2318 *via* interface port(s) 2338. Interface port(s) 2338 include, for example, a serial port, a parallel port, a game port, and a universal serial bus (USB). Output device(s) 2340 use some of the same type of ports as input device(s) 2336. Thus, for example, a USB port may be used to provide input to computer 2312, and to output information from computer 2312 to an output device 2340. Output adapters 2342 are provided to illustrate that there are some output devices 2340 like monitors, speakers, and printers, among other output devices 2340, which require special adapters. The output adapters 2342 include, by way of illustration and not limitation, video and sound cards that provide a means of connection between the output device 2340 and the system bus 2318. It should be noted that other devices and/or systems of devices provide both input and output capabilities such as remote computer(s) 2344.

Computer 2312 can operate in a networked environment using logical connections to one or more remote computers, such as remote computer(s) 2344. The remote computer(s) 2344 can be a personal computer, a server, a router, a network PC, a workstation, a microprocessor based appliance, a peer device or other common network node and the like, and typically includes many or all of the elements described relative to computer 2312. For purposes of brevity, only a memory storage device 2346 is illustrated with remote computer(s) 2344. Remote computer(s) 2344 is logically connected to computer 2312 through a network interface 2348 and then physically connected *via* communication connection 2350. Network interface 2348 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL). Network interface 2348 can also encompass near field communication (NFC) or Bluetooth communication.

Communication connection(s) 2350 refers to the hardware/software employed to connect the network interface 2348 to the system bus 2318. While communication connection 2350 is shown for illustrative clarity inside computer 2312, it can also be external to computer 2312. The hardware/software necessary for connection to the network interface 2348 includes, for exemplary purposes only, internal and external technologies such as, modems including regular telephone grade modems, cable modems and DSL modems, ISDN adapters, and Ethernet cards.

FIG. 24 is a schematic block diagram of a sample computing environment 2400 with which the disclosed subject matter can interact. The sample computing environment 2400 includes one or more client(s) 2402. The client(s) 2402 can be hardware and/or software (e.g., threads, processes, computing devices). The sample computing environment 2400 also includes one or more server(s) 2404. The server(s) 2404 can also be hardware and/or software (e.g., threads, processes, computing devices). The servers 2404 can house threads to perform transformations by employing one or more embodiments as described herein, for example. One possible communication between a client 2402 and servers 2404 can be in the form of a data packet adapted to be transmitted between two or more computer processes. The sample computing environment 2400 includes a communication framework 2406 that can be employed to facilitate communications between the client(s) 2402 and the server(s) 2404. The client(s) 2302 are operably connected to one or more client data store(s) 2408 that can be employed to store information local to the client(s) 2402. Similarly, the server(s) 2404 are operably connected to one or more server data store(s) 2410 that can be employed to store information local to the servers 2404.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

### The following is a list of further preferred embodiments of the invention:

Embodiment 1. A system for indexing industrial data, comprising:
   a memory that stores computer-executable components;
   a processor, operatively coupled to the memory, that executes the computer-executable components, the computer-executable components comprising:
      a discovery component configured to discover available data items distributed across multiple data sources of an industrial environment, wherein the multiple data sources comprise at least a first data source corresponding to a first data platform and a second data source corresponding to a second data platform; and
      an indexing component configured to generate a searchable federated data model that records respective locations of the data items based on information about the available data items generated by the discovery component.
Embodiment 2. The system of embodiment 1, wherein the discovery component is configured to deploy a discovery agent on a plant network and to receive information regarding the available data items from the discovery agent.
Embodiment 3. The system of embodiment 2, wherein the discovery agent is configured to identify a data source, of the multiple data sources, on the plant network and to identify one or more data items available on the data source.
Embodiment 4. The system of embodiment 3, wherein the data source comprises an industrial device and the discovery agent is configured to identify the one or more data items based on an analysis of at least one of a control program executing on the industrial device, a configuration file on the industrial device, or a tag list defined on the industrial device.
Embodiment 5. The system of embodiment 1, wherein at least one of the first data source or the second data source comprises at least one of an industrial device, a knowledgebase storage device, a device documentation storage device, a work schedule storage device, a maintenance record data storage device, or an electronic communication log storage device.
Embodiment 6. The system of embodiment 1, wherein at least one of the first data source or the second data source comprises an industrial controller, and the discovery component is configured to discover, as one of the available data items, a reference to a data tag in a control program executing on the industrial controller.
Embodiment 7. The system of embodiment 6, wherein the discovery component is further configured to identify one or more related data items having a functional relationship with the data tag in the control program based on analysis of the control program, and the indexing component is configured to record the functional relationship in the federated data model.
Embodiment 8. The system of embodiment 1, wherein at least one of the first data source or the second data source comprises a human-machine interface application, and the discovery component is configured to discover, as one of the available data items, a reference to a data tag on a display screen of the human-machine interface application.
Embodiment 9. The system of embodiment 1, further comprising a transform component configured to normalize the information about the available data items according to a common namespace format.
Embodiment 10. The system of embodiment 9, wherein the transform component is further configured to tag one of the available data items with contextual information, wherein the contextual information comprises at least one of a plant identifier, a production area identifier, a machine identifier, a product identifier, an employee identifier, a product identifier, an alarm condition, or an actionable data flag.
Embodiment 11. The system of embodiment 1, wherein the discovery component is further configured to identify at least one interdependency between two or more of the available data items.
Embodiment 12. They system of embodiment 1, wherein
   the discovery component is further configured to receive a sub-model from another system for indexing industrial data, wherein the sub-model represents an industrial system within the industrial environment; and
   the indexing component is further configured to integrate the sub-model with the federated data model.
Embodiment 13. A method for discovering an indexing multi-platform industrial data, comprising:
   deploying, by a system comprising a processor, a discovery agent on a plant network of an industrial environment;
   receiving, by the system, information from the discovery agent about available data items located on multiple data sources of the industrial environment, wherein the multiple data sources comprise at least a first data source corresponding to a first data platform and a second data source corresponding to a second data platform; and
   generating, by the system, a federated data model that indexes respective locations of the data items.
Embodiment 14. The method of embodiment 13, wherein the deploying comprises configuring the discovery agent to identify at least a subset of the available data items residing on an industrial device based on an analysis of at least one of a control program executing on an industrial device, a configuration file on the industrial device, or a tag list defined on the industrial device.
Embodiment 15. The method of embodiment 13, wherein the deploying comprises configuring the discovery agent to identify at least a subset of the available data items residing on an industrial controller based on discovered references to one or more data tags in a control program executing on the industrial controller.
Embodiment 16. The method of embodiment 13, wherein the deploying comprises configuring the discovery agent to identify at least a subset of the available data items residing on a human-machine interface application based on discovered references to one or more data tags on a display screen of the human-machine interface application.
Embodiment 17. The method of embodiment 13, further comprising transforming the information to conform to a common namespace compatible with the federated data model.
Embodiment 18. The method of embodiment 13, further comprising tagging at least one of the available data items with contextual data, wherein the contextual data comprises at least one of a plant identifier, a production area identifier, a machine identifier, a product identifier, an employee identifier, a product identifier, an alarm condition, or an actionable data flag.
Embodiment 19. A non-transitory computer-readable medium having stored thereon instructions that, in response to execution, cause a system comprising a processor to perform operations, the operations comprising:
   deploying a discovery agent on a plant network of an industrial environment;
   receiving information from the discovery agent about available data items located on multiple data sources of the industrial environment, wherein the multiple data sources comprise at least a first data source corresponding to a first data platform and a second data source corresponding to a second data platform; and
   generating, a federated data model that indexes respective locations of the data items.
Embodiment 20. The non-transitory computer-readable medium of embodiment 19, wherein the operations further comprise transforming the information to conform to a common namespace compatible with the federated data model.

## Claims

1. A system for indexing industrial data, comprising:
a memory that stores computer-executable components;
a processor, operatively coupled to the memory, that executes the computer-executable components, the computer-executable components comprising:
a discovery component configured to discover available data items distributed across multiple data sources of an industrial environment, wherein the multiple data sources comprise at least a first data source corresponding to a first data platform and a second data source corresponding to a second data platform; and
an indexing component configured to generate a searchable federated data model that records respective locations of the data items based on information about the available data items generated by the discovery component.

2. The system of claim 1, wherein the discovery component is configured to deploy a discovery agent on a plant network and to receive information regarding the available data items from the discovery agent.

3. The system of claim 2, wherein the discovery agent is configured to identify a data source, of the multiple data sources, on the plant network and to identify one or more data items available on the data source; and/or
wherein the data source comprises an industrial device and the discovery agent is configured to identify the one or more data items based on an analysis of at least one of a control program executing on the industrial device, a configuration file on the industrial device, or a tag list defined on the industrial device.

4. The system of any one of claims 1 to 3, wherein at least one of the first data source or the second data source comprises at least one of an industrial device, a knowledgebase storage device, a device documentation storage device, a work schedule storage device, a maintenance record data storage device, or an electronic communication log storage device.

5. The system of any one of claims 1 to 4, wherein at least one of the first data source or the second data source comprises an industrial controller, and the discovery component is configured to discover, as one of the available data items, a reference to a data tag in a control program executing on the industrial controller; and/or
wherein the discovery component is further configured to identify one or more related data items having a functional relationship with the data tag in the control program based on analysis of the control program, and the indexing component is configured to record the functional relationship in the federated data model.

6. The system of any one of claims 1 to 5, wherein at least one of the first data source or the second data source comprises a human-machine interface application, and the discovery component is configured to discover, as one of the available data items, a reference to a data tag on a display screen of the human-machine interface application.

7. The system of any one of claims 1 to 6, further comprising a transform component configured to normalize the information about the available data items according to a common namespace format; and/or
wherein the transform component is further configured to tag one of the available data items with contextual information, wherein the contextual information comprises at least one of a plant identifier, a production area identifier, a machine identifier, a product identifier, an employee identifier, a product identifier, an alarm condition, or an actionable data flag.

8. The system of any one of claims 1 to 7, wherein the discovery component is further configured to identify at least one interdependency between two or more of the available data items.

9. They system of any one of claims 1 to 8, wherein
the discovery component is further configured to receive a sub-model from another system for indexing industrial data, wherein the sub-model represents an industrial system within the industrial environment; and
the indexing component is further configured to integrate the sub-model with the federated data model.

10. A method for discovering an indexing multi-platform industrial data, comprising:
deploying, by a system comprising a processor, a discovery agent on a plant network of an industrial environment;
receiving, by the system, information from the discovery agent about available data items located on multiple data sources of the industrial environment, wherein the multiple data sources comprise at least a first data source corresponding to a first data platform and a second data source corresponding to a second data platform; and
generating, by the system, a federated data model that indexes respective locations of the data items.

11. The method of claim 10, wherein the deploying comprises configuring the discovery agent to identify at least a subset of the available data items residing on an industrial device based on an analysis of at least one of a control program executing on an industrial device, a configuration file on the industrial device, or a tag list defined on the industrial device.

12. The method of claim 10 or 11, wherein the deploying comprises configuring the discovery agent to identify at least a subset of the available data items residing on an industrial controller based on discovered references to one or more data tags in a control program executing on the industrial controller.

13. The method of any one of claims 10 to 12, wherein the deploying comprises configuring the discovery agent to identify at least a subset of the available data items residing on a human-machine interface application based on discovered references to one or more data tags on a display screen of the human-machine interface application; or
further comprising transforming the information to conform to a common namespace compatible with the federated data model; or
further comprising tagging at least one of the available data items with contextual data, wherein the contextual data comprises at least one of a plant identifier, a production area identifier, a machine identifier, a product identifier, an employee identifier, a product identifier, an alarm condition, or an actionable data flag.

14. A non-transitory computer-readable medium having stored thereon instructions that, in response to execution, cause a system comprising a processor to perform operations, the operations comprising:
deploying a discovery agent on a plant network of an industrial environment;
receiving information from the discovery agent about available data items located on multiple data sources of the industrial environment, wherein the multiple data sources comprise at least a first data source corresponding to a first data platform and a second data source corresponding to a second data platform; and
generating, a federated data model that indexes respective locations of the data items.

15. The non-transitory computer-readable medium of claim 14, wherein the operations further comprise transforming the information to conform to a common namespace compatible with the federated data model.
